# EUROPEAN PATENT APPLICATION

(11) **EP 4 845 068 A1**
(43) Date of publication of application: **25.11.2026**
(21) Application number: 25741392.2
(22) Date of filing: 08.01.2025
(51) Int. Cl.: H04L 1/06

(54) **CHANNEL STATE INFORMATION (CSI) REPORTING METHOD, DEVICE, AND APPARATUS**

(30) Priority: 18.01.2024 CN 202410076304
(71) Applicant: Datang Mobile Communications Equipment Co., Ltd., Beijing 100085 (CN)
(72) Inventor: LI, Hui, Beijing 100085 (CN); GAO, Qiubin, Beijing 100085 (CN); HUANG, Qiuping, Beijing 100085 (CN)
(74) Representative: Studio Torta S.p.A.
(86) International application number: PCT/CN2025/071358
(87) International publication number: WO 2025/152830

(57) **Abstract**

The present disclosure provides a channel state information (CSI) reporting method, a device, and an apparatus. The method comprises: receiving CSI reporting configuration information sent by a network device, wherein the CSI reporting configuration information is associated with a plurality of reference signal resources, measuring the plurality of reference signal resources to obtain respective measurement results of the plurality of reference signal resources, wherein the measurement results comprise reference signal resource indications; and sending CSI to the network device on the basis of the CSI reporting configuration information and the respective measurement results of the plurality of reference signal resources, wherein the CSI comprises a first quantity of reference signal resource indications, and the first quantity is greater than or equal to 2.

## Description

### CROSS-REFERENCES TO RELATED APPLICATIONS

The present application claims priority to Chinese Patent Application No. 202410076304X filed on January 18, 2024, entitled "Channel State Information (CSI) Reporting Method, Device, and Apparatus", which is hereby incorporated by reference in its entirety.

### FIELD

The present application relates to the field of communications, and in particular, to methods, devices, and apparatuses for channel state information (CSI) reporting.

### BACKGROUND

In 5G new radio (NR), a network device may obtain channel characteristics of analog beams corresponding to reference signal resources based on channel state information (CSI) feedback from a terminal, to perform terminal pairing transmission at corresponding analog beams based on the channel characteristics.

In the related art, the network device may configure reference signal resources to be measured for the terminal, and the terminal reports corresponding CSI for each reference signal resource to be measured. However, the flexibility of the above method for CSI reporting is low.

### BRIEF SUMMARY

Embodiments of the present application provide methods for channel state information (CSI) reporting, devices, and apparatuses to improve the flexibility of a CSI feedback mode.

Embodiments of the present application provide a method for CSI reporting, performed by a terminal, including:
receiving CSI reporting configuration information transmitted from a network device, where the CSI reporting configuration information is associated with multiple reference signal resources;
measuring the multiple reference signal resources to obtain respective measurement results of the multiple reference signal resources, where the measurement results include reference signal resource indicators; and
transmitting CSI to the network device based on the CSI reporting configuration information and the respective measurement results of the multiple reference signal resources, where the CSI includes a first number of reference signal resource indicators, and the first number is at least two.

In some embodiments, transmitting the CSI to the network device based on the CSI reporting configuration information and the respective measurement results of the multiple reference signal resources includes:
determining a CSI reporting mode based on the CSI reporting configuration information, where the CSI reporting mode includes a two-level reporting mode or a three-level reporting mode;
determining information of each level CSI in the respective measurement results of the multiple reference signal resources based on the CSI reporting configuration information and the CSI reporting mode; and
transmitting the CSI to the network device based on the information of each level CSI.

In some embodiments, the CSI reporting configuration information is used to indicate any of:
for each port type, a number of reference signal resource indicators to be reported in the reference signal resources respectively corresponding to each port type is K, where K is a positive integer greater than 1;
a total number of reference signal resource indicators to be reported in the multiple reference signal resources is K, where K is a positive integer greater than 1;
for each port type, a number of reference signal resource indicators to be reported in the reference signal resources respectively corresponding to each port type is at most K, where K is a positive integer greater than 1; or
a total number of reference signal resource indicators to be reported in the multiple reference signal resources is at most K, where K is a positive integer greater than 1.

In some embodiments, the CSI reporting mode is the two-level reporting mode in case that the CSI reporting configuration information indicates that for each port type, the number of the reference signal resource indicators to be reported in the reference signal resources respectively corresponding to each port type is K or indicates that the total number of the reference signal resource indicators to be reported in the multiple reference signal resources is K; or,
the CSI reporting mode is the two-level reporting mode or the three-level reporting mode in case that the CSI reporting configuration information indicates that for each port type, the number of the reference signal resource indicators to be reported in the reference signal resources respectively corresponding to each port type is at most K or indicates that the total number of the reference signal resource indicators to be reported in the multiple reference signal resources is at most K.

In some embodiments, in case that the CSI reporting mode is the two-level reporting mode, a first-level CSI in the two-level reporting mode satisfies any of:
for each port type, the first-level CSI includes reference signal resource indicators of K reference signal resources respectively corresponding to each port type in case that the CSI reporting configuration information indicates that for each port type, the number of the reference signal resource indicators to be reported in the reference signal resources respectively corresponding to each port type is K;
the first-level CSI includes reference signal resource indicators of K reference signal resources in case that the CSI reporting configuration information indicates that the total number of the reference signal resource indicators to be reported in the multiple reference signal resources is K;
for each port type, the first-level CSI includes reference signal resource indicators of R reference signal resources respectively corresponding to each port type in case that the CSI reporting configuration information indicates that for each port type, the number of the reference signal resource indicators to be reported in the reference signal resources respectively corresponding to each port type is at most K, where R is a positive integer greater than or equal to 1 and less than or equal to K; or
the first-level CSI includes reference signal resource indicators of R reference signal resources in case that the CSI reporting configuration information indicates that the total number of reference signal resource indicators to be reported in the multiple reference signal resources is at most K, where R is a positive integer greater than or equal to 1 and less than or equal to K.

In some embodiments, in case that the CSI reporting configuration information indicates that for each port type, the number of the reference signal resource indicators to be reported in the reference signal resources respectively corresponding to each port type is at most K, or indicates that the total number of the reference signal resource indicators to be reported in the multiple reference signal resources is at most K, for the first-level CSI, transmitting the CSI to the network device based on the information of each level CSI includes:
transmitting the first-level CSI to the network device based on a bitmap, where a number of bits in the bitmap is determined based on a number of the multiple reference signal resources; and/or,
transmitting the first-level CSI to the network device based on multiple information fields, where a number of the multiple information fields is determined based on the number of the reference signal resource indicators included in the CSI.

In some embodiments, in case that the CSI reporting mode is the three-level reporting mode, a first-level CSI and a second-level CSI in the three-level reporting mode satisfy any of:
for each port type, the first-level CSI includes the number of the reference signal resource indicators to be reported in the reference signal resources respectively corresponding to each port type and the second-level CSI includes reference signal resource indicators of R reference signal resources respectively corresponding to each port type in case that the CSI reporting configuration information indicates that for each port type, the number of the reference signal resource indicators to be reported in the reference signal resources respectively corresponding to each port type is at most K, where R is a positive integer greater than or equal to 1 and less than or equal to K; or
the first-level CSI includes the total number of the reference signal resource indicators to be reported and the second-level CSI includes reference signal resource indicators of R reference signal resources in case that the CSI reporting configuration information indicates that the total number of the reference signal resource indicators to be reported in the multiple reference signal resources is at most K, where R is a positive integer greater than or equal to 1 and less than or equal to K.

In some embodiments, the CSI reporting configuration information is further used to indicate reporting of a rank indicator,
where the first-level CSI further includes M rank indicators in case that the CSI reporting mode is the two-level reporting mode and M is a positive integer greater than or equal to 1 and less than or equal to K; or
the second-level CSI further includes M rank indicators in case that the CSI reporting mode is the three-level reporting mode and M is a positive integer greater than or equal to 1 and less than or equal to K.

In some embodiments, the method further includes:
determining a number of CSIs in case that an uplink resource allocated to the terminal by the network device is less than an uplink resource required for transmitting the CSIs, where the number of the CSIs is one or more;
determining a target CSI among the CSIs based on the number of the CSIs; and
dropping all or part of information in a last-level CSI of the target CSI, where the last-level CSI is the second-level CSI in case that the CSI reporting mode is the two-level reporting mode and the last-level CSI is the third-level CSI in case that the CSI reporting mode is the three-level reporting mode.

In some embodiments, determining the target CSI among the CSIs based on the number of the CSIs includes:
determining the CSI as the target CSI in case that the number of the CSIs is one; or
determining the target CSI among multiple CSIs based on priorities of the multiple CSIs in case that the number of the CSIs is more than one.

In some embodiments, dropping all or part of information in the last-level CSI of the target CSI includes:
determining respective reference signal resource indicator priorities for the first number of reference signal resource indicators included in the target CSI;
determining a second number of target reference signal resource indicators among the first number of the reference signal resource indicators based on the reference signal resource indicator priorities, where the second number is less than or equal to the first number; and
dropping information corresponding to the second number of the target reference signal resource indicators in the last-level CSI.

In some embodiments, for each target reference signal resource indicator, dropping the information corresponding to the second number of the target reference signal resource indicators in the last-level CSI includes:
determining respective bandwidth priorities of wideband CSI, even sub-band CSI, and odd sub-band CSI and dropping all or part of the information corresponding to the target reference signal resource indicators based on the bandwidth priorities, where the bandwidth priorities of the wideband CSI, the even sub-band CSI, and the odd sub-band CSI decrease in sequence; or
determining priorities of precoding matrix indicator (PMI) groups corresponding to the target reference signal resource indicators and dropping all or part of the information corresponding to the target reference signal resource indicators based on the priorities of the PMI groups.

Embodiments of the present application provide a method for CSI reporting, performed by a network device, including:
transmitting CSI reporting configuration information to a terminal, where the CSI reporting configuration information is associated with multiple reference signal resources;
receiving CSI transmitted from the terminal based on the CSI reporting configuration information, where the CSI includes a first number of reference signal resource indicators, and the first number is at least two.

In some embodiments, the CSI reporting configuration information is used to determine a CSI reporting mode and information of each level CSI, and receiving the CSI transmitted from the terminal based on the CSI reporting configuration information includes:
receiving the CSI transmitted from the terminal based on the information of each level CSI, where the CSI reporting mode includes a two-level reporting mode or a three-level reporting mode.

In some embodiments, the CSI reporting configuration information is used to indicate any of:
for each port type, a number of reference signal resource indicators to be reported in the reference signal resources respectively corresponding to each port type is K, where K is a positive integer greater than 1;
a total number of reference signal resource indicators to be reported in the multiple reference signal resources is K, where K is a positive integer greater than 1;
for each port type, a number of reference signal resource indicators to be reported in the reference signal resources respectively corresponding to each port type is at most K, where K is a positive integer greater than 1; or
a total number of reference signal resource indicators to be reported in the multiple reference signal resources is at most K, where K is a positive integer greater than 1.

In some embodiments, the CSI reporting mode is the two-level reporting mode in case that the CSI reporting configuration information indicates that for each port type, the number of the reference signal resource indicators to be reported in the reference signal resources respectively corresponding to each port type is K or indicates that the total number of the reference signal resource indicators to be reported in the multiple reference signal resources is K; or,
the CSI reporting mode is the two-level reporting mode or the three-level reporting mode in case that the CSI reporting configuration information indicates that for each port type, the number of the reference signal resource indicators to be reported in the reference signal resources respectively corresponding to each port type is at most K or indicates that the total number of the reference signal resource indicators to be reported in the multiple reference signal resources is at most K.

In some embodiments, in case that the CSI reporting mode is the two-level reporting mode, a first-level CSI in the two-level reporting mode satisfies any of:
for each port type, the first-level CSI includes reference signal resource indicators of K reference signal resources respectively corresponding to each port type in case that the CSI reporting configuration information indicates that for each port type, the number of the reference signal resource indicators to be reported in the reference signal resources respectively corresponding to each port type is K;
the first-level CSI includes reference signal resource indicators of K reference signal resources in case that the CSI reporting configuration information indicates that the total number of the reference signal resource indicators to be reported in the multiple reference signal resources is K;
for each port type, the first-level CSI includes reference signal resource indicators of R reference signal resources respectively corresponding to each port type in case that the CSI reporting configuration information indicates that for each port type, the number of the reference signal resource indicators to be reported in the reference signal resources respectively corresponding to each port type is at most K, where R is a positive integer greater than or equal to 1 and less than or equal to K; or
the first-level CSI includes reference signal resource indicators of R reference signal resources in case that the CSI reporting configuration information indicates that the total number of reference signal resource indicators to be reported in the multiple reference signal resources is at most K, where R is a positive integer greater than or equal to 1 and less than or equal to K.

In some embodiments, in case that the CSI reporting configuration information indicates that for each port type, the number of the reference signal resource indicators to be reported in the reference signal resources respectively corresponding to each port type is at most K, or indicates that the total number of the reference signal resource indicators to be reported in the multiple reference signal resources is at most K, for the first-level CSI, receiving the CSI transmitted from the terminal based on the information of each level CSI includes:
receiving the first-level CSI transmitted from the terminal based on a bitmap, where a number of bits in the bitmap is determined based on a number of the multiple reference signal resources; and/or,
receiving the first-level CSI transmitted from the terminal based on multiple information fields, where a number of the multiple information fields is determined based on the number of the reference signal resource indicators included in the CSI.

In some embodiments, in case that the CSI reporting mode is the three-level reporting mode, a first-level CSI and a second-level CSI in the three-level reporting mode satisfy any of:
for each port type, the first-level CSI includes the number of the reference signal resource indicators to be reported in the reference signal resources respectively corresponding to each port type and the second-level CSI includes reference signal resource indicators of R reference signal resources respectively corresponding to each port type in case that the CSI reporting configuration information indicates that for each port type, the number of the reference signal resource indicators to be reported in the reference signal resources respectively corresponding to each port type is at most K, where R is a positive integer greater than or equal to 1 and less than or equal to K; or
the first-level CSI includes the total number of the reference signal resource indicators to be reported and the second-level CSI includes reference signal resource indicators of R reference signal resources in case that the CSI reporting configuration information indicates that the total number of the reference signal resource indicators to be reported in the multiple reference signal resources is at most K, where R is a positive integer greater than or equal to 1 and less than or equal to K.

In some embodiments, the CSI reporting configuration information is further used to indicate reporting of a rank indicator,
where the first-level CSI further includes M rank indicators in case that the CSI reporting mode is the two-level reporting mode and M is a positive integer greater than or equal to 1 and less than or equal to K; or
the second-level CSI further includes M rank indicators in case that the CSI reporting mode is the three-level reporting mode and M is a positive integer greater than or equal to 1 and less than or equal to K.

Embodiments of the present application provide a terminal, including a memory, a transceiver, and a processor, where
the memory is used for storing a computer program; the transceiver is used for transmitting and receiving data under control of the processor; and the processor is used for reading the computer program in the memory and performing the following operations:
receiving CSI reporting configuration information transmitted from a network device, where the CSI reporting configuration information is associated with multiple reference signal resources;
measuring the multiple reference signal resources to obtain respective measurement results of the multiple reference signal resources, where the measurement results include reference signal resource indicators; and
transmitting CSI to the network device based on the CSI reporting configuration information and the respective measurement results of the multiple reference signal resources, where the CSI includes a first number of reference signal resource indicators, and the first number is at least two.

In some embodiments, transmitting the CSI to the network device based on the CSI reporting configuration information and the respective measurement results of the multiple reference signal resources includes:
determining a CSI reporting mode based on the CSI reporting configuration information, where the CSI reporting mode includes a two-level reporting mode or a three-level reporting mode;
determining information of each level CSI in the respective measurement results of the multiple reference signal resources based on the CSI reporting configuration information and the CSI reporting mode; and
transmitting the CSI to the network device based on the information of each level CSI.

In some embodiments, the CSI reporting configuration information is used to indicate any of:
for each port type, a number of reference signal resource indicators to be reported in the reference signal resources respectively corresponding to each port type is K, where K is a positive integer greater than 1;
a total number of reference signal resource indicators to be reported in the multiple reference signal resources is K, where K is a positive integer greater than 1;
for each port type, a number of reference signal resource indicators to be reported in the reference signal resources respectively corresponding to each port type is at most K, where K is a positive integer greater than 1; or
a total number of reference signal resource indicators to be reported in the multiple reference signal resources is at most K, where K is a positive integer greater than 1.

In some embodiments, the CSI reporting mode is the two-level reporting mode in case that the CSI reporting configuration information indicates that for each port type, the number of the reference signal resource indicators to be reported in the reference signal resources respectively corresponding to each port type is K or indicates that the total number of the reference signal resource indicators to be reported in the multiple reference signal resources is K; or,
the CSI reporting mode is the two-level reporting mode or the three-level reporting mode in case that the CSI reporting configuration information indicates that for each port type, the number of the reference signal resource indicators to be reported in the reference signal resources respectively corresponding to each port type is at most K or indicates that the total number of the reference signal resource indicators to be reported in the multiple reference signal resources is at most K.

In some embodiments, in case that the CSI reporting mode is the two-level reporting mode, a first-level CSI in the two-level reporting mode satisfies any of:
for each port type, the first-level CSI includes reference signal resource indicators of K reference signal resources respectively corresponding to each port type in case that the CSI reporting configuration information indicates that for each port type, the number of the reference signal resource indicators to be reported in the reference signal resources respectively corresponding to each port type is K;
the first-level CSI includes reference signal resource indicators of K reference signal resources in case that the CSI reporting configuration information indicates that the total number of the reference signal resource indicators to be reported in the multiple reference signal resources is K;
for each port type, the first-level CSI includes reference signal resource indicators of R reference signal resources respectively corresponding to each port type in case that the CSI reporting configuration information indicates that for each port type, the number of the reference signal resource indicators to be reported in the reference signal resources respectively corresponding to each port type is at most K, where R is a positive integer greater than or equal to 1 and less than or equal to K; or
the first-level CSI includes reference signal resource indicators of R reference signal resources in case that the CSI reporting configuration information indicates that the total number of reference signal resource indicators to be reported in the multiple reference signal resources is at most K, where R is a positive integer greater than or equal to 1 and less than or equal to K.

In some embodiments, in case that the CSI reporting configuration information indicates that for each port type, the number of the reference signal resource indicators to be reported in the reference signal resources respectively corresponding to each port type is at most K, or indicates that the total number of the reference signal resource indicators to be reported in the multiple reference signal resources is at most K, for the first-level CSI, transmitting the CSI to the network device based on the information of each level CSI includes:
transmitting the first-level CSI to the network device based on a bitmap, where a number of bits in the bitmap is determined based on a number of the multiple reference signal resources; and/or,
transmitting the first-level CSI to the network device based on multiple information fields, where a number of the multiple information fields is determined based on the number of the reference signal resource indicators included in the CSI.

In some embodiments, in case that the CSI reporting mode is the three-level reporting mode, a first-level CSI and a second-level CSI in the three-level reporting mode satisfy any of:
for each port type, the first-level CSI includes the number of the reference signal resource indicators to be reported in the reference signal resources respectively corresponding to each port type and the second-level CSI includes reference signal resource indicators of R reference signal resources respectively corresponding to each port type in case that the CSI reporting configuration information indicates that for each port type, the number of the reference signal resource indicators to be reported in the reference signal resources respectively corresponding to each port type is at most K, where R is a positive integer greater than or equal to 1 and less than or equal to K; or
the first-level CSI includes the total number of the reference signal resource indicators to be reported and the second-level CSI includes reference signal resource indicators of R reference signal resources in case that the CSI reporting configuration information indicates that the total number of the reference signal resource indicators to be reported in the multiple reference signal resources is at most K, where R is a positive integer greater than or equal to 1 and less than or equal to K.

In some embodiments, the CSI reporting configuration information is further used to indicate reporting of a rank indicator,
where the first-level CSI further includes M rank indicators in case that the CSI reporting mode is the two-level reporting mode and M is a positive integer greater than or equal to 1 and less than or equal to K; or
the second-level CSI further includes M rank indicators in case that the CSI reporting mode is the three-level reporting mode and M is a positive integer greater than or equal to 1 and less than or equal to K.

In some embodiments, the processor is further used for:
determining a number of CSIs in case that an uplink resource allocated to the terminal by the network device is less than an uplink resource required for transmitting the CSIs, where the number of the CSIs is one or more;
determining a target CSI among the CSIs based on the number of the CSIs; and
dropping all or part of information in a last-level CSI of the target CSI, where the last-level CSI is the second-level CSI in case that the CSI reporting mode is the two-level reporting mode and the last-level CSI is the third-level CSI in case that the CSI reporting mode is the three-level reporting mode.

In some embodiments, determining the target CSI among the CSIs based on the number of the CSIs includes:
determining the CSI as the target CSI in case that the number of the CSIs is one; or
determining the target CSI among multiple CSIs based on priorities of the multiple CSIs in case that the number of the CSIs is more than one.

In some embodiments, dropping all or part of information in the last-level CSI of the target CSI includes:
determining respective reference signal resource indicator priorities for the first number of reference signal resource indicators included in the target CSI;
determining a second number of target reference signal resource indicators among the first number of the reference signal resource indicators based on the reference signal resource indicator priorities, where the second number is less than or equal to the first number; and
dropping information corresponding to the second number of the target reference signal resource indicators in the last-level CSI.

In some embodiments, for each target reference signal resource indicator, dropping the information corresponding to the second number of the target reference signal resource indicators in the last-level CSI includes:
determining respective bandwidth priorities of wideband CSI, even sub-band CSI, and odd sub-band CSI and dropping all or part of the information corresponding to the target reference signal resource indicators based on the bandwidth priorities, where the bandwidth priorities of the wideband CSI, the even sub-band CSI, and the odd sub-band CSI decrease in sequence; or
determining priorities of precoding matrix indicator (PMI) groups corresponding to the target reference signal resource indicators and dropping all or part of the information corresponding to the target reference signal resource indicators based on the priorities of the PMI groups.

Embodiments of the present application provide a terminal, including a memory, a transceiver, and a processor, where
the memory is used for storing a computer program; the transceiver is used for transmitting and receiving data under control of the processor; and the processor is used for reading the computer program in the memory and performing the following operations:
transmitting CSI reporting configuration information to a terminal, where the CSI reporting configuration information is associated with multiple reference signal resources;
receiving CSI transmitted from the terminal based on the CSI reporting configuration information, where the CSI includes a first number of reference signal resource indicators, and the first number is at least two.

In some embodiments, the CSI reporting configuration information is used to determine a CSI reporting mode and information of each level CSI, and receiving the CSI transmitted from the terminal based on the CSI reporting configuration information includes:
receiving the CSI transmitted from the terminal based on the information of each level CSI, where the CSI reporting mode includes a two-level reporting mode or a three-level reporting mode.

In some embodiments, the CSI reporting configuration information is used to indicate any of:
for each port type, a number of reference signal resource indicators to be reported in the reference signal resources respectively corresponding to each port type is K, where K is a positive integer greater than 1;
a total number of reference signal resource indicators to be reported in the multiple reference signal resources is K, where K is a positive integer greater than 1;
for each port type, a number of reference signal resource indicators to be reported in the reference signal resources respectively corresponding to each port type is at most K, where K is a positive integer greater than 1; or
a total number of reference signal resource indicators to be reported in the multiple reference signal resources is at most K, where K is a positive integer greater than 1.

In some embodiments, the CSI reporting mode is the two-level reporting mode in case that the CSI reporting configuration information indicates that for each port type, the number of the reference signal resource indicators to be reported in the reference signal resources respectively corresponding to each port type is K or indicates that the total number of the reference signal resource indicators to be reported in the multiple reference signal resources is K; or,
the CSI reporting mode is the two-level reporting mode or the three-level reporting mode in case that the CSI reporting configuration information indicates that for each port type, the number of the reference signal resource indicators to be reported in the reference signal resources respectively corresponding to each port type is at most K or indicates that the total number of the reference signal resource indicators to be reported in the multiple reference signal resources is at most K.

In some embodiments, in case that the CSI reporting mode is the two-level reporting mode, a first-level CSI in the two-level reporting mode satisfies any of:
for each port type, the first-level CSI includes reference signal resource indicators of K reference signal resources respectively corresponding to each port type in case that the CSI reporting configuration information indicates that for each port type, the number of the reference signal resource indicators to be reported in the reference signal resources respectively corresponding to each port type is K;
the first-level CSI includes reference signal resource indicators of K reference signal resources in case that the CSI reporting configuration information indicates that the total number of the reference signal resource indicators to be reported in the multiple reference signal resources is K;
for each port type, the first-level CSI includes reference signal resource indicators of R reference signal resources respectively corresponding to each port type in case that the CSI reporting configuration information indicates that for each port type, the number of the reference signal resource indicators to be reported in the reference signal resources respectively corresponding to each port type is at most K, where R is a positive integer greater than or equal to 1 and less than or equal to K; or
the first-level CSI includes reference signal resource indicators of R reference signal resources in case that the CSI reporting configuration information indicates that the total number of reference signal resource indicators to be reported in the multiple reference signal resources is at most K, where R is a positive integer greater than or equal to 1 and less than or equal to K.

In some embodiments, in case that the CSI reporting configuration information indicates that for each port type, the number of the reference signal resource indicators to be reported in the reference signal resources respectively corresponding to each port type is at most K, or indicates that the total number of the reference signal resource indicators to be reported in the multiple reference signal resources is at most K, for the first-level CSI, receiving the CSI transmitted from the terminal based on the information of each level CSI includes:
receiving the first-level CSI transmitted from the terminal based on a bitmap, where a number of bits in the bitmap is determined based on a number of the multiple reference signal resources; and/or,
receiving the first-level CSI transmitted from the terminal based on multiple information fields, where a number of the multiple information fields is determined based on the number of the reference signal resource indicators included in the CSI.

In some embodiments, in case that the CSI reporting mode is the three-level reporting mode, a first-level CSI and a second-level CSI in the three-level reporting mode satisfy any of:
for each port type, the first-level CSI includes the number of the reference signal resource indicators to be reported in the reference signal resources respectively corresponding to each port type and the second-level CSI includes reference signal resource indicators of R reference signal resources respectively corresponding to each port type in case that the CSI reporting configuration information indicates that for each port type, the number of the reference signal resource indicators to be reported in the reference signal resources respectively corresponding to each port type is at most K, where R is a positive integer greater than or equal to 1 and less than or equal to K; or
the first-level CSI includes the total number of the reference signal resource indicators to be reported and the second-level CSI includes reference signal resource indicators of R reference signal resources in case that the CSI reporting configuration information indicates that the total number of the reference signal resource indicators to be reported in the multiple reference signal resources is at most K, where R is a positive integer greater than or equal to 1 and less than or equal to K.

In some embodiments, the CSI reporting configuration information is further used to indicate reporting of a rank indicator,
where the first-level CSI further includes M rank indicators in case that the CSI reporting mode is the two-level reporting mode and M is a positive integer greater than or equal to 1 and less than or equal to K; or
the second-level CSI further includes M rank indicators in case that the CSI reporting mode is the three-level reporting mode and M is a positive integer greater than or equal to 1 and less than or equal to K.

Embodiments of the present application provide an apparatus for CSI reporting, for use in a terminal, including:
a first receiving module, used for receiving CSI reporting configuration information transmitted from a network device, where the CSI reporting configuration information is associated with multiple reference signal resources;
a measuring module, used for measuring the multiple reference signal resources to obtain respective measurement results of the multiple reference signal resources, where the measurement results include reference signal resource indicators; and
a first transmitting module, used for transmitting CSI to the network device based on the CSI reporting configuration information and the respective measurement results of the multiple reference signal resources, where the CSI includes a first number of reference signal resource indicators, and the first number is at least two.

Embodiments of the present application provide an apparatus for CSI reporting, for use in a network device, including:
a second transmitting module, used for transmitting CSI reporting configuration information to a terminal, where the CSI reporting configuration information is associated with multiple reference signal resources;
a second receiving module, used for receiving CSI transmitted from the terminal based on the CSI reporting configuration information, where the CSI includes a first number of reference signal resource indicators, and the first number is at least two.

Embodiments of the present application provide a computer-readable storage medium storing a computer program, where the computer program is used for causing a computer to perform the method for CSI reporting.

According to the methods for CSI reporting, devices and apparatuses provided by the embodiments of the present application, a terminal receives CSI reporting configuration information transmitted from a network device, where the CSI reporting configuration information is associated with multiple reference signal resources; after measuring the multiple reference signal resources, the terminal obtains respective measurement results of the multiple reference signal resources, where the measurement results include reference signal resource indicators; and then the terminal transmits CSI to the network device based on the CSI reporting configuration information and the respective measurement results of the multiple reference signal resources, where the CSI includes a first number of reference signal resource indicators, and the first number is at least two. Since the network device associates multiple reference signal resources through the CSI reporting configuration information, the terminal measures multiple reference signal resources at one time, and then reports at least two reference signal resource indicators in one CSI feedback. The network device obtains channel characteristics of analog beams corresponding to the at least two reference signal resource indicators, flexibly implementing multi-terminal pairing transmission at multiple analog beams, and improving the flexibility of the CSI feedback mode.

### BRIEF DESCRIPTION OF THE DRAWINGS

To illustrate solutions in the embodiments of the present application more clearly, the drawings need to be used in the descriptions of the embodiments are briefly described below. The drawings in the following description are some embodiments of the present application, and other drawings may be obtained based on these drawings without any creative work for those skilled in the art.
FIG. 1 is a flowchart of a method for channel state information (CSI) reporting according to an embodiment of the present application;
FIG. 2 is a flowchart of reporting, by a terminal, channel state information (CSI) based on CSI reporting configuration information and measurement results according to an embodiment of the present application;
FIG. 3 is a flowchart of dropping part of information in channel state information (CSI) according to an embodiment of the present application;
FIG. 4 is a schematic structural diagram of a terminal according to an embodiment of the present application;
FIG. 5 is a schematic structural diagram of a network device according to an embodiment of the present application;
FIG. 6 is a first schematic structural diagram of an apparatus for channel state information (CSI) reporting according to an embodiment of the present application; and
FIG. 7 is a second schematic structural diagram of an apparatus for channel state information (CSI) reporting according to an embodiment of the present application.

### DETAILED DESCRIPTION

Solutions in the embodiments of the present application are clearly and completely described below in conjunction with the accompanying drawings. These embodiments are only a part of the embodiments of the present application, and not all of the embodiments. All other embodiments obtained by those skilled in the art based on the embodiments of the present application without any creative work belong to the scope of the present application.

To avoid introducing multiple types and subtypes of feedback configurations, a unified channel state information (CSI) feedback framework is adopted in new radio (NR) for being capable of supporting different application scenarios. The CSI feedback framework decouples CSI measurement from CSI reporting, and implements flexible channel state information-reference signal (CSI-RS) configuration and CSI reporting configuration.

In the CSI feedback mode in the related art, only one analog beam and channel characteristics corresponding to the analog beam may be obtained in each feedback. Even if a multiple-feedback mode is adopted, it is possible that the channel characteristics corresponding to the same analog beam are reported in each feedback, and multiple feedbacks will cause a large feedback latency, making the previously reported CSI invalid.

The embodiments of the present application provide a method for CSI reporting to report channel characteristics corresponding to multiple analog beams in one CSI reporting process, improving the flexibility of CSI reporting. The solutions of the embodiments of the present application will be introduced below in combination with the accompanying drawings.

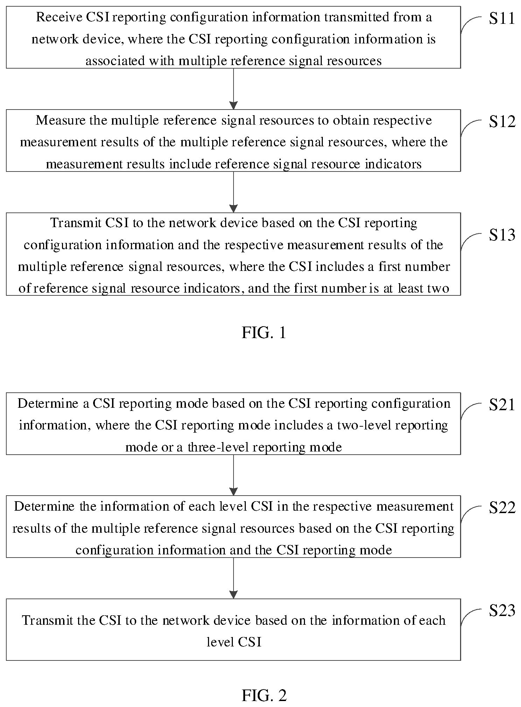

FIG. 1 is a flowchart of a method for CSI reporting according to an embodiment of the present application. The method is performed by a terminal, as shown in FIG. 1, the method includes the following.

S11: Receive CSI reporting configuration information transmitted from a network device, where the CSI reporting configuration information is associated with multiple reference signal resources.

The network device transmits the CSI reporting configuration information to the terminal, and the CSI reporting configuration information is used to indicate CSI reporting for the terminal. In an embodiment, the CSI reporting configuration information includes configured reporting quantities, a number of the reporting quantities, a granularity of reporting frequency, a reporting periodicity, an uplink resource for reporting, and so on. The reporting quantities are used to indicate related content of reference signal resources reported by the terminal in the CSI, the number of the reporting quantities is used to indicate the number of the reference signal resources reported in the CSI, the granularity of reporting frequency is used to indicate that the terminal is configured for sub-band reporting or wideband reporting, the reporting periodicity is used to indicate a periodicity for the terminal to perform CSI reporting, and the uplink resource for reporting is used to indicate an uplink resource used by the terminal during a CSI reporting process, and so on.

The CSI reporting configuration information is associated with multiple reference signal resources. The multiple reference signal resources include channel state information-reference signal (CSI-RS) signal resources, or SS (synchronization signal)/PBCH (physical broadcast channel) block (SSB) signal resources, which is not limited in the embodiments of the present application.

S12: Measure the multiple reference signal resources to obtain respective measurement results of the multiple reference signal resources, where the measurement results include reference signal resource indicators.

The multiple reference signal resources associated with the CSI reporting configuration information are the reference signal resources to be measured by the terminal. After receiving the CSI reporting configuration information, the terminal learns the multiple reference signal resources associated with the CSI reporting configuration information, and measures the multiple reference signal resources to obtain respective measurement results of the multiple reference signal resources.

For measurement results of any reference signal resource, the measurement results include a reference signal resource indicator of the reference signal resource, and further include a rank indicator (RI), a channel quality indicator (CQI), a precoding matrix indicator (PMI), and so on, of the reference signal resource.

In an embodiment, the reference signal resource indicator represents an index of a corresponding reference signal resource and is used to uniquely identify the reference signal resource. The reference signal resource indicator includes a CSI-RS resource indicator (CRI) or an SSB resource indicator (SSBRI). In case that the reference signal resource belongs to a CSI-RS resource, the corresponding reference signal resource indicator is a CRI and in case that the reference signal resource belongs to an SSB resource, the corresponding reference signal resource indicator is an SSBRI.

S13: Transmit CSI to the network device based on the CSI reporting configuration information and the respective measurement results of the multiple reference signal resources, where the CSI includes a first number of reference signal resource indicators, and the first number is at least two.

In addition to being associated with the multiple reference signal resources, the CSI reporting configuration information further indicates measurement quantities and a reporting mode reported by the terminal. After obtaining the respective measurement results of the multiple reference signal resources, the terminal determines reference signal resources that satisfy requirements among the multiple reference signal resources, and reports reference signal resource indicators of the first number of reference signal resources that satisfy the requirements in the CSI. The CSI includes the first number of reference signal resource indicators, and the first number is at least two.

In an embodiment, the CSI further includes the first number of other measurement quantities of reference signal resources, such as an RI, a CQI, a PMI, and so on, which is not limited in the embodiments of the present application.

According to the method for CSI reporting provided by the embodiments of the present application, a terminal receives CSI reporting configuration information transmitted from a network device, where the CSI reporting configuration information is associated with multiple reference signal resources; after measuring the multiple reference signal resources, the terminal obtains respective measurement results of the multiple reference signal resources, where the measurement results include reference signal resource indicators; and then the terminal transmits CSI to the network device based on the CSI reporting configuration information and the respective measurement results of the multiple reference signal resources, where the CSI includes a first number of reference signal resource indicators, and the first number is at least two. Since the network device associates multiple reference signal resources through the CSI reporting configuration information, the terminal measures multiple reference signal resources at one time, and then reports at least two reference signal resource indicators in one CSI feedback. The network device obtains channel characteristics of analog beams corresponding to the at least two reference signal resource indicators, flexibly implementing multi-terminal pairing transmission at multiple analog beams, and improving the flexibility of the CSI feedback mode.

Implementation solutions for the terminal to report CSI based on the CSI reporting configuration information and the respective measurement results of the multiple reference signal resources are introduced below with reference to FIG. 2.

FIG. 2 is a flowchart of reporting, by a terminal, CSI based on CSI reporting configuration information and measurement results according to an embodiment of the present application. As shown in FIG. 2, the method includes the following.

S21: Determine a CSI reporting mode based on the CSI reporting configuration information, where the CSI reporting mode includes a two-level reporting mode or a three-level reporting mode.

The network device may configure a CSI reporting mode for the terminal through the CSI reporting configuration information. In the embodiments of the present application, the CSI reporting mode includes the two-level reporting mode or the three-level reporting mode.

The two-level reporting mode refers to a mode of reporting CSI to the network device through a first-level CSI and a second-level CSI. The first-level CSI and the second-level CSI include different information. The information included in the first-level CSI and the second-level CSI together constitutes related information of reference signal resources to be reported. A degree of importance of the information included in the first-level CSI is higher than a degree of importance of the information included in the second-level CSI, accordingly, a reporting priority of the first-level CSI is higher than a reporting priority of the second-level CSI.

Based on the information included in the first-level CSI, the information included in the second-level CSI may be determined, and further, the size of the second-level CSI and a required resource overhead may be determined. For example, the first-level CSI may include reference signal resource indicators and RIs. The reference signal resource indicators are used to indicate reference signal resources, and the number of the reference signal resources to be reported may be determined based on the reference signal resource indicators. The RIs are used to indicate the number of ranks for each reference signal resource. Based on the reference signal resource indicators and the RIs, the information included in the second-level CSI, a size of the second-level CSI, and the resource overhead may be determined.

In an embodiment, after the first-level CSI is reported, the information in the second-level CSI may be selectively dropped in case of determining that an uplink resource allocated to the terminal by the network device is insufficient to complete the CSI reporting based on the resource overhead required for the second-level CSI.

The three-level reporting mode refers to a mode of reporting CSI to the network device through a first-level CSI, a second-level CSI, and a third-level CSI, and the first-level CSI, the second-level CSI, and the third-level CSI include different information. The information included in the first-level CSI, the second-level CSI, and the third-level CSI together constitutes related information of reference signal resources to be reported. In an embodiment, a degree of importance of the information included in the first-level CSI, a degree of importance of the information included in the second-level CSI, and a degree of importance of the information included in the third-level CSI decrease in sequence, accordingly, a reporting priority of the first-level CSI, a reporting priority of the second-level CSI, and a reporting priority of the third-level CSI decrease in sequence.

Based on the information included in the first-level CSI and the second-level CSI, the information included in the third-level CSI may be determined, and further, a size of the third-level CSI and a required resource overhead may be determined. In an embodiment, after the first-level CSI and the second-level CSI are reported, the information in the third-level CSI may be selectively dropped in case of determining that an uplink resource allocated to the terminal by the network device is insufficient to complete the CSI reporting based on the resource overhead required for the third-level CSI.

In the embodiments of the present application, the CSI reporting configuration information may include a parameter K, where K is a positive integer greater than 1. The CSI reporting configuration information is used to indicate any one of the following items 1.1 to 1.4:

1.1: For each port type, a number of reference signal resource indicators to be reported in the reference signal resources respectively corresponding to each port type is K.

In the embodiments of the present application, the CSI reporting configuration information is associated with multiple reference signal resources, and each reference signal resource has its own port type. In an embodiment, the port type represents the number of ports of the corresponding reference signal resource. For example, the number of ports of the reference signal resources may be 8, 16, and so on. Respective port types of the multiple reference signal resources may be the same or different. Taking an example where port types involved in the multiple reference signal resources associated with the CSI reporting configuration information include x types, and a port type of any reference signal resource belongs to one of the x port types. Item 1.1 represents that for each port type of the x port types, the CSI reporting configuration information is used to indicate that K reference signal resource indicators need to be reported in reference signal resources corresponding to the port type, and the K reference signal resource indicators are used to indicate K reference signal resources of the port type.

1.2: A total number of reference signal resource indicators to be reported in the multiple reference signal resources is K.

Item 1.2 represents that for the multiple reference signal resources associated with the CSI reporting configuration information, the CSI reporting configuration information is used to indicate that a total of K reference signal resource indicators are reported, and the K reference signal resource indicators are used to indicate K reference signal resources among the multiple reference signal resources.

A difference between item 1.2 and item 1.1 lies in that: in item 1.1, the CSI reporting configuration information indicates the reference signal resource indicators to be reported with the port type as a dimension, and if the port types involved in the multiple reference signal resources include x types, the total number of the reference signal resource indicators to be reported is x*K; in item 1.2, the total number of the reference signal resource indicators to be reported is indicated through the CSI reporting configuration information, and regardless of how many port types are involved in the multiple reference signal resources, the total number of the reference signal resource indicators to be reported is K.

1.3: For each port type, a number of reference signal resource indicators to be reported in the reference signal resources respectively corresponding to each port type is at most K.

Taking an example where port types involved in the multiple reference signal resources associated with the CSI reporting configuration information include x types, and a port type of any reference signal resource belongs to one of the x port types, item 1.3 represents that for each port type of the x port types, the CSI reporting configuration information is used to indicate that at most K reference signal resource indicators need to be reported in reference signal resources corresponding to the port type, and the at most K reference signal resource indicators are used to indicate at most K reference signal resources of the port type.

1.4: A total number of reference signal resource indicators to be reported in the multiple reference signal resources is at most K.

Item 1.4 represents that for the multiple reference signal resources associated with the CSI reporting configuration information, the CSI reporting configuration information is used to indicate that a total of at most K reference signal resource indicators are reported, and each reference signal resource indicator corresponds to one reference signal resource.

A difference between item 1.4 and item 1.3 lies in that: in item 1.3, the CSI reporting configuration information indicates the reference signal resource indicators to be reported with the port type as a dimension, and if the port types involved in the multiple reference signal resources include x types, and the number of the reference signal resource indicators to be reported in the reference signal resources respectively corresponding to each port type is R (R is less than or equal to K), the total number of the reference signal resource indicators to be reported is x*R; in item 1.4, the total number of the reference signal resource indicators to be reported is indicated as at most K through the CSI reporting configuration information, and regardless of how many port types are involved in the multiple reference signal resources, the total number of the reference signal resource indicators to be reported is R.

Based on the above items 1.1 to 1.4, the CSI reporting mode may be determined.

In an embodiment, for the above items 1.1 and 1.2, the CSI reporting mode is the two-level reporting mode in case that the CSI reporting configuration information indicates that for each port type, the number of the reference signal resource indicators to be reported in the reference signal resources respectively corresponding to each port type is K or indicates that the total number of the reference signal resource indicators to be reported in the multiple reference signal resources is K.

In an embodiment, for the above items 1.3 and 1.4, the CSI reporting mode is the two-level reporting mode or the three-level reporting mode in case that the CSI reporting configuration information indicates that for each port type, the number of the reference signal resource indicators to be reported in the reference signal resources respectively corresponding to each port type is at most K or indicates that the total number of the reference signal resource indicators to be reported in the multiple reference signal resources is at most K.

S22: Determine the information of each level CSI in the respective measurement results of the multiple reference signal resources based on the CSI reporting configuration information and the CSI reporting mode.

In an embodiment, the CSI reporting configuration information may configure reporting quantities for the terminal, such as reference signal resource indicators, rank indicators (RIs), precoding matrix indicators (PMIs), channel quality indicators (CQIs), and so on. The reference signal resource indicators are used to indicate corresponding reference signal resources. The RI represents the number of ranks of each reference signal resource and is also used to indicate the number of transport blocks (TBs) corresponding to the reference signal resource. If the RI is greater than 4, the reference signal resource corresponds to 2 TBs and if the RI is less than or equal to 4, the reference signal resource corresponds to 1 TB. The TBs are used for subsequent data transmission between the terminal and the network device.

The CSI reporting configuration information may also configure the granularity of the reporting frequency, i.e., whether the terminal performs wideband reporting or sub-band reporting. If wideband reporting is configured, one wideband CQI is reported for the entire system bandwidth. If sub-band reporting is configured, the terminal reports one wideband CQI for the entire system bandwidth and an additional sub-band CQI for each sub-band.

The CSI reporting configuration information may also configure corresponding codebook information, such as a Type I or Type II codebook. The PMI of the reporting quantity is determined based on the codebook information.

The CSI reporting modes include the two-level reporting mode and the three-level reporting mode. How to determine the information of each level CSI is introduced below for the two different CSI reporting modes in combination with the CSI reporting configuration information.

In case that the CSI reporting mode is the two-level reporting mode, the CSI includes a first-level CSI and a second-level CSI. Information respectively included in the first-level CSI and the second-level CSI in the two-level reporting mode under different circumstances is introduced below.

In the two-level reporting mode, the degree of importance of the information included in the first-level CSI is higher than the degree of importance of the information included in the second-level CSI. The first-level CSI usually includes information of fixed overhead, while the second-level CSI usually includes information of non-fixed overhead. In the embodiments of the present application, the fixed overhead refers to that required uplink resources are known, and the non-fixed overhead refers to that required uplink resources are uncertain.

For the two-level reporting mode, for example, the information of fixed overhead may include a reference signal resource indicator and an RI, and the information of non-fixed overhead may include a PMI and a CQI; or, the information of fixed overhead may include a reference signal resource indicator, an RI, a wideband part of a PMI, and a wideband part of a CQI, and the information of non-fixed overhead may include a sub-band part of the PMI and a sub-band part of the CQI; or, the information of fixed overhead may include a reference signal resource indicator, an RI, part of information of a PMI, and part of information of a CQI, and the information of non-fixed overhead may include another part of information of the PMI and another part of information of the CQI.

In an embodiment, in case that configured codebook information is a Type I codebook, the wideband parts of the CQI and the PMI belong to the information in the first-level CSI, and the sub-band parts of the CQI and the PMI belong to the information in the second-level CSI, and in case that the configured codebook information is a Type II codebook, part of the information of the CQI and the PMI belongs to the information in the first-level CSI, and another part of the information of the CQI and the PMI belongs to the information in the second-level CSI.

For the two-level reporting mode, the first-level CSI may include a reference signal resource indicator and an RI and the second-level CSI may include a PMI and a CQI; or, the first-level CSI may include a reference signal resource indicator, an RI, a wideband part of a PMI, and a wideband part of a CQI and the second-level CSI may include a sub-band part of the PMI and a sub-band part of the CQI; or, the first-level CSI may include a reference signal resource indicator, an RI, part of information of a PMI, and part of information of a CQI and the second-level CSI may include another part of information of the PMI and another part of information of the CQI.

In the following, information respectively included in the first-level CSI and the second-level CSI in the two-level reporting mode is introduced in combination with specific examples.

2.1: In case that the CSI reporting configuration information indicates that for each port type, the number of reference signal resource indicators to be reported in reference signal resources respectively corresponding to the port type is K, the terminal adopts the two-level reporting mode, where for each port type, the first-level CSI includes reference signal resource indicators of K reference signal resources respectively corresponding to the port type.

In an embodiment, the CSI reporting configuration information is further used to indicate reporting of an RI. In case that the CSI reporting mode is the two-level reporting mode, in addition to the reference signal resource indicators of the K reference signal resources respectively corresponding to each port type, the first-level CSI may further include M RIs, where M is a positive integer greater than or equal to 1 and less than or equal to K.

Taking an example where the multiple reference signal resources include a total of n port types, the first-level CSI includes reference signal resource indicators of K reference signal resources respectively corresponding to each port type (i.e., reference signal resource indicators of n*K reference signal resources) and M RIs, and the second-level CSI may include PMIs and CQIs respectively corresponding to the reference signal resource indicators of the n*K reference signal resources.

In an embodiment, the first-level CSI includes the reference signal resource indicators of the n*K reference signal resources, M RIs, and wideband parts of PMIs and wideband parts of CQIs respectively corresponding to the reference signal resource indicators of the n*K reference signal resources, and the second-level CSI may include sub-band parts of PMIs and sub-band parts of CQIs respectively corresponding to the reference signal resource indicators of the n*K reference signal resources.

In an embodiment, the first-level CSI may include the reference signal resource indicators of the n*K reference signal resources, M RIs, and part of information of PMIs and part of information of CQIs respectively corresponding to the reference signal resource indicators of the n*K reference signal resources, and the second-level CSI may include another part of information of the PMIs and another part of information of the CQIs respectively corresponding to the reference signal resource indicators of the n*K reference signal resources.

In the following, the implementation solution of item 2.1 is described by taking Example A as an example.

### Example A

A network device configures a terminal to perform CSI reporting. The multiple reference signal resources associated with CSI reporting configuration information include four 16-port CSI-RS resources and four 8-port CSI-RS resources, respectively corresponding to a 1st CSI-RS resource to an 8-th CSI-RS resource. Different CSI-RS resources implicitly correspond to different analog beams. Reporting quantities configured by the network device for the terminal through the CSI reporting configuration information include a CRI, an RI, a PMI, and a CQI. The PMI adopts a Rel-16 Type II codebook, and is configured with sub-band CQI feedback.

The CSI reporting configuration information indicates that for each port type, the number of reference signal resource indicators to be reported in reference signal resources respectively corresponding to the port type is K=2. The CSI reporting mode is determined as a two-level reporting mode. Since the multiple reference signal resources are all CSI-RS resources, the corresponding reference signal resource indicators are CRIs. Since port types involved in the multiple reference signal resources include two port types, i.e., 16-port and 8-port, the number of reference signal resource indicators to be reported in reference signal resources of each port type is K=2. That is, two CRIs need to be reported for the 16-port CSI-RS resources, and two CRIs need to be reported for the 8-port CSI-RS resources.

After receiving the CSI reporting configuration information, the terminal measures the four 16-port CSI-RS resources and the four 8-port CSI-RS resources respectively. In one embodiment, the terminal measures a reference signal received power (RSRP) of each CSI-RS resource among the four 16-port CSI-RS resources, and sorts the measurement results to determine two 16-port CSI-RS resources with the largest RSRP. It is assumed that the two CSI-RS resources with the largest RSRP are a 1st CSI-RS resource and a 2nd CSI-RS resource, and corresponding resource indices are CRI1 and CRI2. Similarly, the terminal measures the RSRP of each resource of the four 8-port resources, sorts measurement results to determine two 8-port CSI-RS resources with the largest RSRP. It is assumed that the two CSI-RS resources with the largest RSRP are a 6th CSI-RS resource and an 8th CSI-RS resource, and corresponding resource indices are CRI6 and CRI8.

The terminal calculates the RI, PMI, and CQI corresponding to each CSI-RS resource among the four determined CSI-RS resources. According to the CSI reporting configuration information, sub-band reporting is adopted, and it is assumed that there are 8 sub-bands in total. Since a maximum number of ranks for the Rel-16 Type II codebook is 2, a value of the RI is less than or equal to 4. As described above, in case that the value of the RI is less than or equal to 4, a reference signal resource corresponds to one TB and in case that the value of the RI is greater than 4, a reference signal resource corresponds to two TBs. In case that the CSI reporting configuration information is configured with sub-band CQI feedback, the terminal reports one wideband CQI for the entire system bandwidth, and in addition, the terminal reports one sub-band CQI for each sub-band. Therefore, in this example, each CSI-RS resource corresponds to one TB, and its CQI includes one wideband CQI and 8 sub-band CQIs. By using a corresponding CSI calculation method, information included in the first-level CSI and information included in the second-level CSI may be obtained.

The information included in the first-level CSI is referred to in Table 1 below.

**Table 1**

| CRI1 | CRI2 | CRI6 | CRI8 | RI1 | RI2 | RI6 | RI8 |
|---|---|---|---|---|---|---|---|
| Wideband CQI and 8 sub-band CQIs of TB1 corresponding to CRI1 | | | | | | | |
| Wideband CQI and 8 sub-band CQIs of TB1 corresponding to CRI2 | | | | | | | |
| Wideband CQI and 8 sub-band CQIs of TB1 corresponding to CRI6 | | | | | | | |
| Wideband CQI and 8 sub-band CQIs of TB1 corresponding to CRI8 | | | | | | | |
| Wideband parameter of PMI corresponding to CRI1 (total number of non-zero coefficients of all layers) | | | | | | | |
| Wideband parameter of PMI corresponding to CRI2 (total number of non-zero coefficients of all layers) | | | | | | | |
| Wideband parameter of PMI corresponding to CRI6 (total number of non-zero coefficients of all layers) | | | | | | | |
| Wideband parameter of PMI corresponding to CRI8 (total number of non-zero coefficients of all layers) | | | | | | | |

Referring to Table 1, for each port type, the first-level CSI includes reference signal resource indicators of K reference signal resources respectively corresponding to the port type. In case that the port type is 16-port, the first-level CSI includes two CRIs respectively corresponding to the 16-port, i.e., CRI1 and CRI2 in Table 1; for a case where the port type is 8-port, the first-level CSI includes two CRIs respectively corresponding to the 8-port, i.e., CRI6 and CRI8 in Table 1. Further, the first-level CSI further includes M RIs, which are RI1, RI2, RI6, and RI8 respectively. In one embodiment, each CRI adopts 3-bit feedback, and each RI adopts 1-bit feedback.

Referring to Table 1, the first-level CSI further includes the wideband CQI and 8 sub-band CQIs of TB1 corresponding to each CRI, and a wideband parameter of the PMI corresponding to each CRI. The wideband parameter of the PMI represents a total number of non-zero coefficients of all layers.

The information included in the second-level CSI is referred to in Table 2 below.

**Table 2**

| |
|---|
| Group 0 PMI corresponding to CRI1 |
| Group 1 PMI corresponding to CRI1 |
| Group 2 PMI corresponding to CRI1 |
| Group 0 PMI corresponding to CRI2 |
| Group 1 PMI corresponding to CRI2 |
| Group 2 PMI corresponding to CRI2 |
| Group 0 PMI corresponding to CRI6 |
| Group 1 PMI corresponding to CRI6 |
| Group 2 PMI corresponding to CRI6 |
| Group 0 PMI corresponding to CRI8 |
| Group 1 PMI corresponding to CRI8 |
| Group 2 PMI corresponding to CRI8 |

The second-level CSI includes information of non-fixed overhead. Referring to Table 2. In Example A, the information of non-fixed overhead includes PMIs corresponding to the reference signal resource indicators. For each port type, the second-level CSI includes PMIs corresponding to K reference signal resources respectively corresponding to the port type, where the PMIs have corresponding groups, including Group 0, Group 1, and Group 2 respectively. As shown in Table 1, the K reference signal resources respectively corresponding to each port type include CRI1 and CRI2 corresponding to 16-port, and CRI6 and CRI8 corresponding to 8-port. The information included in the second-level CSI is: Group 0 PMI, Group 1 PMI, and Group 2 PMI corresponding to CRI1; Group 0 PMI, Group 1 PMI, and Group 2 PMI corresponding to CRI2; Group 0 PMI, Group 1 PMI, and Group 2 PMI corresponding to CRI6; and Group 0 PMI, Group 1 PMI, and Group 2 PMI corresponding to CRI8. In each embodiment of the present application, Group 0 includes a spatial domain basis vector indicator, a rotation factor, and a strongest coefficient indicator (SCI) for each layer; Group 1 includes a frequency domain basis vector indicator, an initial value indicator of an intermediate basis vector set, a reference amplitude, high-priority non-zero coefficients, and non-zero coefficient position indicators corresponding to the high-priority non-zero coefficients; Group 2 includes low-priority non-zero coefficients and non-zero coefficient position indicators corresponding to the low-priority non-zero coefficients.

If an uplink resource, such as a physical uplink shared channel (PUSCH) resource size, allocated to the terminal by the network device is sufficient, the terminal directly feeds back the above CSI to the network device.

After receiving the CSI, the network device obtains channel information corresponding to analog beams 1, 2, 6, and 8. Further, according to CSI fed back by other terminals, terminals feeding back the same analog beam may be subjected to multi-user (MU) scheduling. For example, if another terminal feeds back analog beam 2, the network device may use analog beam 2 to perform transmission for the two terminals simultaneously.

2.2: In case that the CSI reporting configuration information indicates that a total number of reference signal resource indicators to be reported in multiple reference signal resources is K, the terminal adopts the two-level reporting mode, where the first-level CSI includes reference signal resource indicators of K reference signal resources.

In an embodiment, the CSI reporting configuration information is further used to indicate reporting of an RI. In case that the CSI reporting mode is the two-level reporting mode, in addition to the reference signal resource indicators of the K reference signal resources, the first-level CSI may further include M RIs, where M is a positive integer greater than or equal to 1 and less than or equal to K.

Regardless of how many kinds of port types of the multiple reference signal resources are associated with the CSI reporting configuration information, the first-level CSI includes reference signal resource indicators of K reference signal resources and further includes M RIs, and the second-level CSI includes PMIs and CQIs respectively corresponding to the reference signal resource indicators of the K reference signal resources.

In an embodiment, the first-level CSI includes the reference signal resource indicators of the K reference signal resources, M RIs, and wideband parts of PMIs and wideband parts of CQIs respectively corresponding to the reference signal resource indicators of the K reference signal resources, and the second-level CSI may include sub-band parts of PMIs and sub-band parts of CQIs respectively corresponding to the reference signal resource indicators of the K reference signal resources.

In an embodiment, the first-level CSI may include the reference signal resource indicators of the K reference signal resources, M RIs, and part of information of PMIs and part of information of CQIs respectively corresponding to the reference signal resource indicators of the K reference signal resources, and the second-level CSI may include another part of information of the PMIs and another part of information of the CQIs respectively corresponding to the reference signal resource indicators of the K reference signal resources.

Implementation solutions of item 2.2 are introduced below by taking Example B and Example C as examples.

### Example B

A network device configures a terminal to perform CSI reporting. Multiple reference signal resources associated with CSI reporting configuration information include eight 16-port CSI-RS resources. Different CSI-RS resources implicitly correspond to different analog beams. Reporting quantities configured by the network device for the terminal through the CSI reporting configuration information include a CRI, an RI, a PMI, and a CQI. The PMI adopts a Rel-15 Type I codebook and is configured with sub-band reporting. The CSI reporting configuration information indicates that a total number of reference signal resource indicators to be reported in the multiple reference signal resources is K=4. Since the multiple reference signal resources are all CSI-RS resources, the corresponding reference signal resource indicators are CRIs. That is, four CRIs need to be reported in total. The CSI reporting mode is determined as a two-level reporting mode.

After receiving the CSI reporting configuration information, the terminal measures the eight 16-port CSI-RS resources. In one embodiment, the terminal measures an RSRP of each CSI-RS resource among the eight 16-port CSI-RS resources, and sorts the measurement results. K=4 CSI-RS resources with the largest RSRP values are determined, and resource indices of the K=4 CSI-RS resources, i.e., the corresponding four CRIs, are obtained. Assuming that the K=4 results measured by the terminal are a 1st CSI-RS resource, a 3rd CSI-RS resource, a 5th CSI-RS resource, and a 7th CSI-RS resource, the corresponding resource indices are represented as CRI1, CRI3, CRI5, and CRI7.

The terminal calculates the RI, PMI, and CQI corresponding to each CSI-RS resource among the K=4 CSI-RS resources. According to the CSI reporting configuration information, sub-band reporting is adopted, and it is assumed that there are 8 sub-bands in total. The 16-port PMI of each CSI-RS resource includes one wideband PMI and 8 sub-band PMIs. If the value of the RI is less than or equal to 4, each CSI-RS resource corresponds to one TB, and its CQI includes one wideband CQI and 8 sub-band CQIs. If the value of the RI is greater than 4, each CSI-RS resource corresponds to two TBs, and each TB corresponds to one wideband CQI and 8 sub-band CQIs. Taking an example where the values of RI are all greater than 4, information included in the first-level CSI and information included in the second-level CSI may be obtained by using a corresponding CSI calculation method.

The information included in the first-level CSI may be referred to in Table 3 below.

**Table 3**

| CRI1 | CRI3 | CRI5 | CRI7 | RI1 | RI3 | RI5 | RI7 |
|---|---|---|---|---|---|---|---|
| Wideband CQI and 8 sub-band CQIs of TB1 corresponding to CRI1 | | | | | | | |
| Wideband CQI and 8 sub-band CQIs of TB1 corresponding to CRI3 | | | | | | | |
| Wideband CQI and 8 sub-band CQIs of TB1 corresponding to CRI5 | | | | | | | |
| Wideband CQI and 8 sub-band CQIs of TB1 corresponding to CRI7 | | | | | | | |

Referring to Table 3, the first-level CSI includes reference signal resource indicators of K reference signal resources, i.e., CRI1, CRI3, CRI5, and CRI7. The first-level CSI further includes M RIs, which are RI1, RI3, RI5, and RI7 respectively. Each CRI adopts 3-bit feedback, and each RI adopts 1-bit feedback. Since the RIs are greater than 4, each CSI-RS resource corresponds to two TBs. The first-level CSI further includes the wideband CQI and 8 sub-band CQIs of TB1 corresponding to each CRI, which are: the wideband CQI and 8 sub-band CQIs of TB1 corresponding to CRI1; the wideband CQI and 8 sub-band CQIs of TB1 corresponding to CRI3; the wideband CQI and 8 sub-band CQIs of TB1 corresponding to CRI5; and the wideband CQI and 8 sub-band CQIs of TB1 corresponding to CRI7.

The information included in the second-level CSI may be referred to in Table 4 below.

**Table 4**

| |
|---|
| Wideband CQI of TB 2 corresponding to CRI1 |
| Wideband PMI corresponding to CRI1 |
| Wideband CQI of TB 2 corresponding to CRI3 |
| Wideband PMI corresponding to CRI3 |
| Wideband CQI of TB 2 corresponding to CRI5 |
| Wideband PMI corresponding to CRI5 |
| Wideband CQI of TB 2 corresponding to CRI7 |
| Wideband PMI corresponding to CRI7 |
| 4 even sub-band CQIs of TB 2 corresponding to CRI1 |
| 4 even sub-band PMIs corresponding to CRI1 |
| 4 odd sub-band CQIs of TB 2 corresponding to CRI1 |
| 4 odd sub-band PMIs corresponding to CRI1 |
| 4 even sub-band CQIs of TB 2 corresponding to CRI3 |
| 4 even sub-band PMIs corresponding to CRI3 |
| 4 odd sub-band CQIs of TB 2 corresponding to CRI3 |
| 4 odd sub-band PMIs corresponding to CRI3 |
| 4 even sub-band CQIs of TB 2 corresponding to CRI5 |
| 4 even sub-band PMIs corresponding to CRI5 |
| 4 odd sub-band CQIs of TB 2 corresponding to CRI5 |
| 4 odd sub-band PMIs corresponding to CRI5 |
| 4 even sub-band CQIs of TB 2 corresponding to CRI7 |
| 4 even sub-band PMIs corresponding to CRI7 |
| 4 odd sub-band CQIs of TB 2 corresponding to CRI7 |
| 4 odd sub-band PMIs corresponding to CRI7 |

Referring to Table 4. Through the first-level CSI, the reference signal resource indicators of K reference signal resources are determined. The second-level CSI includes wideband PMIs and even sub-band PMIs respectively corresponding to the reference signal resource indicators of the K reference signal resources, and wideband CQIs, odd sub-band CQIs, and even sub-band CQIs of transport block 2 corresponding to the reference signal resource indicators of the K reference signal resources.

If an uplink resource, such as a PUSCH resource size, allocated to the terminal by the network device is sufficient, the terminal directly feeds back the above CSI to the network device.

After receiving the CSI, the network device obtains channel information corresponding to analog beams 1, 3, 5, and 7. According to CSI fed back by other terminals, terminals feeding back the same analog beam may be subjected to MU scheduling.

### Example C:

A network device configures a terminal to perform CSI reporting. Multiple reference signal resources associated with CSI reporting configuration information include four 16-port CSI-RS resources and four 8-port CSI-RS resources. Different CSI-RS resources implicitly correspond to different analog beams. Reporting quantities configured by the network device for the terminal through the CSI reporting configuration information include a CRI, an RI, a PMI, and a CQI. The PMI adopts a Rel-15 Type I codebook and is configured with wideband reporting. The CSI reporting configuration information indicates that a total number of reference signal resource indicators to be reported in the multiple reference signal resources is K=4. Since the multiple reference signal resources are all CSI-RS resources, the corresponding reference signal resource indicators are CRIs. That is, four CRIs need to be reported in total. The CSI reporting mode is determined as a two-level reporting mode.

After receiving the CSI reporting configuration information, the terminal measures the eight 16-port CSI-RS resources. In one embodiment, the terminal measures an RSRP of each resource among the eight 16-port CSI-RS resources, and performs sorting according to results. K=4 CSI-RS resources with the largest RSRP values are determined, and resource indices of the K=4 CSI-RS resources are obtained. Assuming that the K=4 results measured by the terminal are a 1st CSI-RS resource, a 3rd CSI-RS resource, a 5th CSI-RS resource, and a 7th CSI-RS resource, the corresponding resource indices are represented as CRI1, CRI3, CRI5, and CRI7.

The terminal calculates the RI, PMI, and CQI corresponding to each CSI-RS resource among the K=4 CSI-RS resources. According to the CSI reporting configuration information, wideband reporting is adopted. In this way, each CSI-RS resource only includes a wideband PMI. If the value of the RI is less than or equal to 4, each CSI-RS resource corresponds to one TB, and its CQI includes one wideband CQI. If the value of the RI is greater than 4, each CSI-RS resource corresponds to two TBs, and each transport block corresponds to one wideband CQI. Taking an example where the values of RI are all greater than 4, information included in the first-level CSI and information included in the second-level CSI may be obtained by using a corresponding CSI calculation method.

The information included in the first-level CSI may be referred to in Table 5 below.

**Table 5**

| | | | |
|---|---|---|---|
| CRI1 | CRI3 | CRI5 | CRI7 |

Table 5 illustrates a case where the first-level CSI only includes reference signal resource indicators of K reference signal resources, i.e., CRI1, CRI3, CRI5, and CRI7. Each CRI adopts 3-bit feedback.

The information included in the second-level CSI may be referred to in Table 6 below.

**Table 6**

| RI1 |
|---|
| Zero padding |
| Wideband PMI corresponding to CRI1 |
| Wideband CQI of TB1 corresponding to CRI1 |
| Wideband CQI of TB2 corresponding to CRI1 |

| RI3 |
|---|
| Zero padding |
| Wideband PMI corresponding to CRI3 |
| Wideband CQI of TB1 corresponding to CRI3 |
| Wideband CQI of TB2 corresponding to CRI3 |

| RI5 |
|---|
| Zero padding |
| Wideband PMI corresponding to CRI5 |
| Wideband CQI of TB1 corresponding to CRI5 |
| Wideband CQI of TB2 corresponding to CRI5 |

| RI7 |
|---|
| Zero padding |
| Wideband PMI corresponding to CRI7 |
| Wideband CQI of TB1 corresponding to CRI7 |
| Wideband CQI of TB2 corresponding to CRI7 |

Table 6 illustrates a case where the second-level CSI includes: RIs respectively corresponding to the reference signal resource indicators of the K reference signal resources; wideband PMIs respectively corresponding to the reference signal resource indicators of the K reference signal resources; and wideband CQIs of TB1 and wideband CQIs of TB2 respectively corresponding to the reference signal resource indicators of the K reference signal resources.

If an uplink resource, such as a PUSCH resource size, allocated to the terminal by the network device is sufficient, the terminal directly feeds back the above CSI to the network device.

After receiving the CSI, the network device obtains channel information corresponding to analog beams 1, 3, 5, and 7. According to CSI fed back by other terminals, terminals feeding back the same analog beam may be subjected to MU scheduling.

2.3: In case that the CSI reporting configuration information indicates that for each port type, the number of reference signal resource indicators to be reported in reference signal resources respectively corresponding to the port type is at most K, the terminal adopts the two-level reporting mode, where for each port type, the first-level CSI includes reference signal resource indicators of R reference signal resources respectively corresponding to the port type, and R is a positive integer greater than or equal to 1 and less than or equal to K.

In an embodiment, the CSI reporting configuration information is further used to indicate reporting of an RI. In case that the CSI reporting mode is the two-level reporting mode, in addition to the reference signal resource indicators of at most K reference signal resources respectively corresponding to each port type, the first-level CSI may further include M RIs, where M is a positive integer greater than or equal to 1 and less than or equal to K.

In an embodiment, for item 2.3, i.e., in case that the CSI reporting configuration information indicates that for each port type, the number of reference signal resource indicators to be reported is at most K, for the first-level CSI, transmitting the CSI to the network device based on the information of each level CSI includes:
transmitting the first-level CSI to the network device based on a bitmap, where a number of bits in the bitmap is determined based on a number of the multiple reference signal resources; and/or,
transmitting the first-level CSI to the network device based on multiple information fields, where a number of the multiple information fields is determined based on the number of the reference signal resource indicators included in the CSI.

Taking an example where the multiple reference signal resources include a total of n port types, the first-level CSI includes reference signal resource indicators of R reference signal resources respectively corresponding to each port type (i.e., reference signal resource indicators of n*R reference signal resources) and M RIs, and the second-level CSI may include PMIs and CQIs respectively corresponding to the reference signal resource indicators of the n*R reference signal resources.

In an embodiment, the first-level CSI includes the reference signal resource indicators of the n*R reference signal resources, M RIs, and wideband parts of PMIs and wideband parts of CQIs respectively corresponding to the reference signal resource indicators of the n*R reference signal resources, and the second-level CSI may include sub-band parts of PMIs and sub-band parts of CQIs respectively corresponding to the reference signal resource indicators of the n*R reference signal resources.

In an embodiment, the first-level CSI may include the reference signal resource indicators of the n*R reference signal resources, M RIs, and part of information of PMIs and part of information of CQIs respectively corresponding to the reference signal resource indicators of the n*R reference signal resources, and the second-level CSI may include another part of information of the PMIs and another part of information of the CQIs respectively corresponding to the reference signal resource indicators of the n*R reference signal resources.

Implementation solution of item 2.3 is described below by taking Example D as an example.

### Example D

A network device configures a terminal to perform CSI reporting. Multiple reference signal resources associated with CSI reporting configuration information include four 16-port CSI-RS resources and four 8-port CSI-RS resources, respectively corresponding to a 1st CSI-RS resource to an 8th CSI-RS resource. Different CSI-RS resources implicitly correspond to different analog beams. Reporting quantities configured by the network device for the terminal through the CSI reporting configuration information include a CRI, an RI, a PMI, and a CQI. The PMI adopts a Rel-16 Type II codebook and is configured with sub-band CQI feedback. The CSI reporting configuration information indicates that for each port type, the number of reference signal resource indicators to be reported in reference signal resources respectively corresponding to the port type is at most K, where K=2. The CSI reporting mode is determined as a two-level reporting mode or a three-level reporting mode. In Example D, the two-level reporting mode is taken as an example for description.

Since the multiple reference signal resources are all CSI-RS resources, the corresponding reference signal resource indicators are CRIs. Since port types involved in the multiple reference signal resources include two port types, i.e., 16-port and 8-port, the number of reference signal resource indicators to be reported in the reference signal resources of each port type is at most K. That is, at most two CRIs are reported for the 16-port CSI-RS resources, and at most two CRIs are reported for the 8-port CSI-RS resources. The CSI reporting mode is a two-level reporting mode.

After receiving the CSI reporting configuration information, the terminal measures the four 16-port CSI-RS resources and the four 8-port CSI-RS resources respectively. The terminal measures an RSRP of each CSI-RS resource among the four 16-port CSI-RS resources. According to the measurement results, the terminal determines that there is only one CSI-RS resource satisfying an RSRP threshold, assumed to be the 2nd CSI-RS resource with an index of CRI2. Simultaneously, the terminal measures the RSRP of each CSI-RS resource among the four 8-port CSI-RS resources. According to measurement results, the terminal determines that there is only one CSI-RS resource satisfying the RSRP threshold, assumed to be the 6th CSI-RS resource with an index of CRI6. The RSRP threshold may be configured by the network device or determined by the terminal itself.

The terminal calculates the RI, PMI, and CQI corresponding to each CSI-RS resource among the two CSI-RS resources. According to the CSI reporting configuration information, sub-band reporting is adopted, and it is assumed that there are 8 sub-bands in total. Since a maximum rank of the Rel-16 Type II codebook is 2, the value of the RI is less than or equal to 2. Each CSI-RS resource corresponds to one TB, and its CQI includes one wideband CQI and 8 sub-band CQIs. By using a corresponding CSI calculation method, information included in the first-level CSI and information included in the second-level CSI may be obtained.

The first-level CSI may be transmitted via a bitmap or via information fields.

Mode 1: The first-level CSI is transmitted via a bitmap. The number of bits in the bitmap is determined by the number of CSI-RS resources associated with the CSI reporting configuration information. The RI is reported using eight 3-bit indication fields. For unselected CSI-RS resources, the corresponding RI values are 0.

**Table 7**

| 0 | 1 | 0 | 0 | 0 | 1 | 0 | 0 |
|---|---|---|---|---|---|---|---|
| 0 | RI2 | 0 | 0 | 0 | RI6 | 0 | 0 |
| Wideband CQI and 8 sub-band CQIs of TB1 corresponding to CRI2 | | | | | | | |
| Wideband CQI and 8 sub-band CQIs of TB1 corresponding to CRI6 | | | | | | | |
| Wideband parameter of PMI corresponding to CRI2 (total number of non-zero coefficients of all layers) | | | | | | | |
| Wideband parameter of PMI corresponding to CRI6 (total number of non-zero coefficients of all layers) | | | | | | | |

Table 7 illustrates the information included in the first-level CSI in case that the first-level CSI is transmitted via a bitmap. The first row corresponds to the reporting of CRIs, totaling 8 bits; the second row corresponds to the reporting of RIs, totaling 24 bits, where each RI value is 3 bits. CRI2 and CRI6, as well as RI2 and RI6, are indicated through the first and second rows. The first-level CSI further includes the wideband CQI and 8 sub-band CQIs of TB1 corresponding to each reference signal resource indicator, as well as the wideband parameter of the PMI corresponding to each reference signal resource indicator.

Mode 2: The first-level CSI is transmitted via information fields. The number of information fields is determined by the number of reference signal resource indicators included in the CSI. In an embodiment, the CRI for each port count is reported using K (N+1) bits, where N is determined by the logarithm of the number of CSI-RS resources of the corresponding port count associated with the reporting. The RI is reported using K 3-bit fields, as follows.

**Table 8**

| 010 | 100 | 010 | 100 | RI2 | 0 | RI6 | 0 |
|---|---|---|---|---|---|---|---|
| Wideband CQI and 8 sub-band CQIs of TB1 corresponding to CRI2 | | | | | | | |
| Wideband CQI and 8 sub-band CQIs of TB1 corresponding to CRI6 | | | | | | | |
| Wideband parameter of PMI corresponding to CRI2 (total number of non-zero coefficients of all layers) | | | | | | | |
| Wideband parameter of PMI corresponding to CRI6 (total number of non-zero coefficients of all layers) | | | | | | | |

Table 8 illustrates the information included in the first-level CSI in case that the first-level CSI is transmitted via information fields. According to the above configuration, the CRI reporting for 16-port CSI-RS resources is indicated by two (K=2) 3-bit fields. Each 3-bit field corresponds to one CRI, where the 1st bit indicates whether the CRI field is valid, and the remaining 2 bits represent the value of the CRI. For example, in this embodiment, the 1st bit of 0 indicates that the CRI field is valid. The first two CRI fields are 16-port CSI-RS resource indication fields, respectively corresponding to CRI2 and an invalid field. The latter two CRI fields are 8-port CSI-RS resource indication fields, respectively corresponding to CRI6 and an invalid field. CRI2 and CRI6, as well as RI2 and RI6, are indicated through the first and second rows. The first-level CSI further includes the wideband CQI and 8 sub-band CQIs of TB1 corresponding to each reference signal resource indicator, as well as the wideband parameter of the PMI corresponding to each reference signal resource indicator.

The information included in the second-level CSI may be referred to in Table 9 below.

**Table 9**

| |
|---|
| Group 0 PMI corresponding to CRI2 |
| Group 1 PMI corresponding to CRI2 |
| Group 2 PMI corresponding to CRI2 |
| Group 0 PMI corresponding to CRI6 |
| Group 1 PMI corresponding to CRI6 |
| Group 2 PMI corresponding to CRI6 |

Referring to Table 9, for each port type, the second-level CSI includes PMIs corresponding to R reference signal resource indicators respectively corresponding to the port type, where the PMIs have corresponding groups, including Group 0, Group 1, and Group 2 respectively. As shown in Table 9, the R reference signal resource indicators respectively corresponding to each port type include CRI2 corresponding to 16-port and CRI6 corresponding to 8-port. The information included in the second-level CSI is: Group 0 PMI, Group 1 PMI, and Group 2 PMI corresponding to CRI2; and Group 0 PMI, Group 1 PMI, and Group 2 PMI corresponding to CRI6.

If an uplink resource, such as a PUSCH size, allocated to the terminal by the base station is sufficient, the terminal directly feeds back the above results to the base station. Other processes are similar to embodiments 1 and 2 and will not be repeated here.

If an uplink resource, such as a PUSCH resource size, allocated to the terminal by the network device is sufficient, the terminal directly feeds back the above CSI to the network device.

After receiving the CSI, the network device obtains channel information corresponding to analog beams 2 and 6. According to CSI fed back by other terminals, terminals feeding back the same analog beam may be subjected to MU scheduling.

2.4: In case that the CSI reporting configuration information indicates that the number of reference signal resource indicators to be reported in the multiple reference signal resources is at most K, the terminal adopts the two-level reporting mode, where the first-level CSI includes reference signal resource indicators of R reference signal resources.

In an embodiment, for item 2.4, i.e., in case that the CSI reporting configuration information indicates that the number of reference signal resource indicators to be reported is at most K, for the first-level CSI, transmitting the CSI to the network device based on the information of each level CSI includes:
transmitting the first-level CSI to the network device based on a bitmap, where a number of bits in the bitmap is determined based on a number of the multiple reference signal resources; and/or,
transmitting the first-level CSI to the network device based on multiple information fields, where a number of the multiple information fields is determined based on the number of the reference signal resource indicators included in the CSI.

In an embodiment, the CSI reporting configuration information is further used to indicate reporting of an RI. In case that the CSI reporting mode is the two-level reporting mode, in addition to the reference signal resource indicators of at most K reference signal resources, the first-level CSI may further include M RIs, where M is a positive integer greater than or equal to 1 and less than or equal to K.

Regardless of the number of port types of the multiple reference signal resources associated with the CSI reporting configuration information, the first-level CSI always includes at most K (e.g., R) reference signal resource indicators and further includes M RIs, and the second-level CSI includes PMIs and CQIs respectively corresponding to the reference signal resource indicators of the R reference signal resources.

In an embodiment, the first-level CSI includes the reference signal resource indicators of the R reference signal resources, M RIs, and wideband parts of PMIs and wideband parts of CQIs respectively corresponding to the reference signal resource indicators of the R reference signal resources, and the second-level CSI may include sub-band parts of PMIs and sub-band parts of CQIs respectively corresponding to the reference signal resource indicators of the R reference signal resources.

In an embodiment, the first-level CSI may include the reference signal resource indicators of the R reference signal resources, M RIs, and part of information of PMIs and part of information of CQIs respectively corresponding to the reference signal resource indicators of the R reference signal resources, and the second-level CSI may include another part of information of the PMIs and another part of information of the CQIs respectively corresponding to the reference signal resource indicators of the R reference signal resources.

Implementation solution of item 2.4 is described below by taking Example E as an example.

### Example E

A network device configures a terminal to perform CSI reporting. Multiple reference signal resources associated with CSI reporting configuration information include eight 16-port CSI-RS resources. Different CSI-RS resources implicitly correspond to different analog beams. Reporting quantities configured by the network device for the terminal through the CSI reporting configuration information include a CRI, an RI, a PMI, and a CQI. The PMI adopts a Rel-15 Type I codebook and is configured with sub-band reporting. The CSI reporting configuration information indicates that the number of reference signal resource indicators to be reported among the multiple reference signal resources is at most K, where K=4. Since the multiple reference signal resources are all CSI-RS resources, the corresponding reference signal resource indicators are CRIs. Four CRIs need to be reported in total. The CSI reporting mode is determined as a two-level reporting mode or a three-level reporting mode. In Example E, the two-level reporting mode is taken as an example for description.

After receiving the CSI reporting configuration information, the terminal measures the eight 16-port CSI-RS resources. In one embodiment, the terminal measures the RSRP of each CSI-RS resource among the eight 16-port CSI-RS resources. According to measurement results, the terminal determines that there are only 3 CSI-RS resources satisfying an RSRP threshold. The RSRP threshold may be configured by the network device or determined by the terminal itself. Therefore, the terminal determines to report 3 CSI-RS resources and obtains resource indices of these 3 CSI-RS resources. Assuming that the 3 CSI-RS resources to be reported as measured by the terminal are a 3rd CSI-RS resource, a 5th CSI-RS resource, and a 7th CSI-RS resource, the corresponding resource indices are represented as CRI3, CRI5, and CRI7.

The terminal calculates the RI, PMI, and CQI corresponding to each CSI-RS resource among the 3 CSI-RS resources. According to the CSI reporting configuration information, sub-band reporting is adopted, and it is assumed that there are 8 sub-bands in total. The 16-port PMI of each CSI-RS resource includes one wideband PMI and 8 sub-band PMIs. If the value of the RI is less than or equal to 4, each CSI-RS resource corresponds to one TB, and its CQI includes one wideband CQI and 8 sub-band CQIs. If the value of the RI is greater than 4, each CSI-RS resource corresponds to two TBs, and each TB corresponds to one wideband CQI and 8 sub-band CQIs. Taking an example where the values of the RIs are all greater than 4, information included in the first-level CSI and information included in the second-level CSI may be obtained by using a corresponding CSI calculation method.

The first-level CSI may be transmitted via a bitmap or via information fields.

Mode 1: The first-level CSI is transmitted via a bitmap. The number of bits in the bitmap is determined by the number of CSI-RS resources associated with the CSI reporting configuration information. The RI is reported using eight 3-bit indication fields. For unselected CSI-RS resources, the corresponding RI values are 0.

In case that the first-level CSI is transmitted via a bitmap, the information included in the first-level CSI may be referred to in Table 10 below.

**Table 10**

| | | | | | | | |
|---|---|---|---|---|---|---|---|
| 0 | 0 | 1 | 0 | 1 | 0 | 1 | 0 |
| 0 | 0 | RI3 | 0 | RI5 | 0 | RI7 | 0 |
| Wideband CQI and 8 sub-band CQIs of TB1 corresponding to CRI3 | | | | | | | |
| Wideband CQI and 8 sub-band CQIs of TB1 corresponding to CRI5 | | | | | | | |
| Wideband CQI and 8 sub-band CQIs of TB1 corresponding to CRI7 | | | | | | | |

Table 10 illustrates the information included in the first-level CSI in case that the first-level CSI is transmitted via a bitmap. In Table 10, the first row corresponds to the reporting of CRIs, totaling 8 bits; the second row corresponds to the reporting of RIs, totaling 24 bits, where each RI value is 3 bits. Referring to Table 10, the first-level CSI further includes the wideband CQI and 8 sub-band CQIs of TB1 corresponding to each CRI.

Mode 2: The first-level CSI is transmitted via information fields. The number of information fields is determined by the number of reference signal resource indicators included in the CSI. In an embodiment, the CRI is reported using K (N+1) bits, where N is determined by the logarithm of the number of CSI-RS resources associated with the reporting. The RI is reported using K 3-bit fields.

In case that the first-level CSI is transmitted via information fields, the information included in the first-level CSI may be referred to in Table 11 below.

**Table 11**

| | | | | | | | |
|---|---|---|---|---|---|---|---|
| 0011 | 0101 | 0111 | 1000 | RI3 | RI5 | RI7 | 0 |
| Wideband CQI and 8 sub-band CQIs of TB1 corresponding to CRI3 | | | | | | | |
| Wideband CQI and 8 sub-band CQIs of TB1 corresponding to CRI5 | | | | | | | |
| Wideband CQI and 8 sub-band CQIs of TB1 corresponding to CRI7 | | | | | | | |

Table 11 illustrates the information included in the first-level CSI in case that the first-level CSI is transmitted via information fields. According to the above configuration, the CRI reporting is indicated by four (K=4) 4-bit fields. Each 4-bit field corresponds to one CRI, where the 1st bit indicates whether the CRI field is valid, and the remaining 3 bits represent the value of the CRI. For example, in this embodiment, the 1st bit of 0 indicates that the CRI field is valid; that is, the first three CRI fields respectively correspond to CRI3, CRI5, and CRI7. The fourth CRI field is invalid. For valid CRI fields, the corresponding RI values are reported. The first-level CSI further includes the wideband CQI and 8 sub-band CQIs of TB1 corresponding to each reference signal resource indicator.

The information included in the second-level CSI may be referred to in Table 12 below.

**Table 12**

| |
|---|
| Wideband CQI of TB2 corresponding to CRI3 |
| Wideband PMI corresponding to CRI3 |
| Wideband CQI of TB2 corresponding to CRI5 |
| Wideband PMI corresponding to CRI5 |
| Wideband CQI of TB2 corresponding to CRI7 |
| Wideband PMI corresponding to CRI7 |
| 4 even sub-band CQIs of TB2 corresponding to CRI3 |
| 4 even sub-band PMIs corresponding to CRI3 |
| 4 odd sub-band CQIs of TB2 corresponding to CRI3 |
| 4 odd sub-band PMIs corresponding to CRI3 |
| 4 even sub-band CQIs of TB2 corresponding to CRI5 |
| 4 even sub-band PMIs corresponding to CRI5 |
| 4 odd sub-band CQIs of TB2 corresponding to CRI5 |
| 4 odd sub-band PMIs corresponding to CRI5 |
| 4 even sub-band CQIs of TB2 corresponding to CRI7 |
| 4 even sub-band PMIs corresponding to CRI7 |
| 4 odd sub-band CQIs of TB2 corresponding to CRI7 |
| 4 odd sub-band PMIs corresponding to CRI7 |

Referring to Table 12, for each port type, the second-level CSI includes part of information of the PMIs and CQIs respectively corresponding to R reference signal resource indicators respectively corresponding to the port type. For any reference signal resource indicator, the PMI corresponding to the reference signal resource indicator includes a wideband PMI, odd sub-band PMIs, and even sub-band PMIs, and the part of information of the CQI corresponding to the reference signal resource indicator includes a wideband CQI, odd sub-band CQIs, and even sub-band CQIs of TB2 corresponding to the reference signal resource.

If an uplink resource, such as a PUSCH resource size, allocated to the terminal by the network device is sufficient, the terminal directly feeds back the above CSI to the network device.

After receiving the CSI, the network device obtains channel information corresponding to analog beams 1, 3, 5, and 7. According to CSI fed back by other terminals, terminals feeding back the same analog beam may be subjected to MU scheduling.

In case that the CSI reporting mode is a three-level reporting mode, the CSI includes first-level CSI, second-level CSI, and third-level CSI. In the following, information respectively included in the first-level CSI, the second-level CSI, and the third-level CSI in the three-level reporting mode at different circumstances is introduced.

In the three-level reporting mode, a degree of importance of information included in the first-level CSI and the second-level CSI is higher than a degree of importance of information included in the third-level CSI. The first-level CSI and the second-level CSI usually include information of fixed overhead, while the third-level CSI usually includes information of non-fixed overhead.

For the three-level reporting mode, for example, the information of fixed overhead may include a reference signal resource indicator and an RI, and the information of non-fixed overhead may include a PMI and a CQI; or, the information of fixed overhead may include a reference signal resource indicator, an RI, a wideband part of a PMI, and a wideband part of a CQI, and the information of non-fixed overhead may include a sub-band part of the PMI and a sub-band part of the CQI; or, the information of fixed overhead may include a reference signal resource indicator, an RI, part of information of a PMI, and part of information of a CQI, and the information of non-fixed overhead may include another part of information of the PMI and another part of information of the CQI.

The first-level CSI includes a number of reference signal resource indicators. In case that configured codebook information is a Type I codebook, wideband parts of the CQI and the PMI belong to information in the second-level CSI, and sub-band parts of the CQI and the PMI belong to information in the third-level CSI; in case that the configured codebook information is a Type II codebook, part of information of the CQI and the PMI belongs to information in the second-level CSI, and another part of information of the CQI and the PMI belongs to information in the third-level CSI.

For the three-level reporting mode, the second-level CSI may include a reference signal resource indicator and an RI, and the third-level CSI may include a PMI and a CQI; or, the second-level CSI may include a reference signal resource indicator, an RI, a wideband part of a PMI, and a wideband part of a CQI, and the third-level CSI may include a sub-band part of the PMI and a sub-band part of the CQI; or, the second-level CSI may include a reference signal resource indicator, an RI, part of information of a PMI, and part of information of a CQI, and the third-level CSI may include another part of information of the PMI and another part of information of the CQI.

Information respectively included in the first-level CSI, the second-level CSI, and the third-level CSI in the three-level reporting mode is introduced below in combination with specific examples.

3.1: In case that the CSI reporting configuration information indicates that for each port type, the number of reference signal resource indicators to be reported in reference signal resources respectively corresponding to the port type is at most K, for each port type, the first-level CSI includes the number of the reference signal resource indicators to be reported in the reference signal resources respectively corresponding to the port type, and the second-level CSI includes reference signal resource indicators of R reference signal resources respectively corresponding to the port type, where R is a positive integer greater than or equal to 1 and less than or equal to K.

In an embodiment, the CSI reporting configuration information is further used to indicate reporting of an RI. In case that the CSI reporting mode is the three-level reporting mode, in addition to the reference signal resource indicators of the R reference signal resources respectively corresponding to each port type, the second-level CSI may further include M RIs, where M is a positive integer greater than or equal to 1 and less than or equal to K.

Taking an example where the multiple reference signal resources include a total of n port types, in an embodiment, the first-level CSI includes a number of reference signal resource indicators of the R reference signal resources respectively corresponding to each port type (i.e., reference signal resource indicators of the n*R reference signal resources), the second-level CSI includes the reference signal resource indicators of the n*R reference signal resources and M RIs, and the third-level CSI may include PMIs and CQIs respectively corresponding to the reference signal resource indicators of the n*R reference signal resources.

In an embodiment, the first-level CSI includes the number of reference signal resource indicators of the n*R reference signal resources; the second-level CSI includes the reference signal resource indicators of the n*R reference signal resources, M RIs, and wideband parts of PMIs and wideband parts of CQIs respectively corresponding to the reference signal resource indicators of the n*R reference signal resources; and the third-level CSI may include sub-band parts of the PMIs and sub-band parts of the CQIs respectively corresponding to the reference signal resource indicators of the n*R reference signal resources.

In an embodiment, the first-level CSI includes the number of reference signal resource indicators of the n*R reference signal resources; the second-level CSI may include the reference signal resource indicators of the n*R reference signal resources, M RIs, and part of information of PMIs and part of information of CQIs respectively corresponding to the reference signal resource indicators of the n*R reference signal resources; and the third-level CSI may include another part of information of the PMIs and another part of information of the CQIs respectively corresponding to the reference signal resource indicators of the n*R reference signal resources.

Implementation solution of item 3.1 is described below by taking Example F as an example.

### Example F

A network device configures a terminal to perform CSI reporting. Multiple reference signal resources associated with CSI reporting configuration information include four 16-port CSI-RS resources and four 8-port CSI-RS resources, respectively corresponding to a 1st CSI-RS resource to an 8th CSI-RS resource. Different CSI-RS resources implicitly correspond to different analog beams. Reporting quantities configured by the network device for the terminal through the CSI reporting configuration information include a CRI, an RI, a PMI, and a CQI. Therein, the PMI adopts a Rel-16 Type II codebook and is configured with sub-band CQI feedback. The CSI reporting configuration information indicates that for each port type, the number of reference signal resource indicators to be reported among reference signal resources respectively corresponding to the port type is at most K, where K=2. Since the multiple reference signal resources are all CSI-RS resources, the corresponding reference signal resource indicators are CRIs. Since port types involved in the multiple reference signal resources include two port types, i.e., 16-port and 8-port, the number of reference signal resource indicators to be reported in the reference signal resources of each port type is at most K. That is, at most two CRIs are reported for the 16-port CSI-RS resources, and at most two CRIs are reported for the 8-port CSI-RS resources. The CSI reporting mode is determined as a two-level reporting mode or a three-level reporting mode. In Example F, the three-level reporting mode is taken as an example for description.

After receiving the CSI reporting configuration information, the terminal measures the four 16-port CSI-RS resources and the four 8-port CSI-RS resources respectively. The terminal measures an RSRP of each CSI-RS resource among the four 16-port CSI-RS resources. According to measurement results, the terminal determines that there is only one CSI-RS resource satisfying an RSRP threshold, assumed to be the 2nd CSI-RS resource with an index of CRI2. Simultaneously, the terminal measures the RSRP of each CSI-RS resource among the four 8-port CSI-RS resources. According to measurement results, the terminal determines that there is only one CSI-RS resource satisfying the RSRP threshold, assumed to be the 6th CSI-RS resource with an index of CRI6. The RSRP threshold may be configured by the network device or determined by the terminal itself.

The terminal calculates the RI, PMI, and CQI corresponding to each CSI-RS resource among the two CSI-RS resources. According to the CSI reporting configuration information, sub-band reporting is adopted, and it is assumed that there are 8 sub-bands in total. Since a maximum rank of the Rel-16 Type II codebook is 2, the value of the RI is less than or equal to 2, each CSI-RS resource corresponds to one TB, and its CQI includes one wideband CQI and 8 sub-band CQIs. By using a corresponding CSI calculation method, information included in the first-level CSI, information included in the second-level CSI, and information included in the third-level CSI may be obtained.

The first-level CSI may be transmitted via a bitmap or via information fields.

Mode 1: The first-level CSI is transmitted via a bitmap. The number of bits in the bitmap is determined by the number of CSI-RS resources associated with the CSI reporting configuration information. The number of bits in this part is equal to the number of CSI-RS resources for each port count associated with the reporting.

In case that the first-level CSI is transmitted via a bitmap, the information included in the first-level CSI may be referred to in Table 13 below.

**Table 13**

| | | | | | | | |
|---|---|---|---|---|---|---|---|
| 0 | 1 | 0 | 0 | 0 | 1 | 0 | 0 |

Table 13 illustrates the information included in the first-level CSI in case that the first-level CSI is transmitted via a bitmap. The first 4 bits correspond to 16-port CSI-RS resources, and the latter 4 bits correspond to 8-port CSI-RS resources. Refer to Table 13, for the 16-port reference signal resources, the number of reported CRIs is 1 and for the 8-port reference signal resources, the number of reported CRIs is 1.

Mode 2: The first-level CSI is transmitted via information fields. The number of information fields is determined by the number of reference signal resource indicators included in the CSI. The number of bits in this part is determined by taking the logarithm of the number of CSI-RS resources for each port count associated with the reporting.

In case that the first-level CSI is transmitted via information fields, the information included in the first-level CSI may be referred to in Table 14 below.

**Table 14**

| | |
|---|---|
| The number of CRIs for 16-port CSI-RS resources is L=1 | The number of CRIs for 8-port CSI-RS resources is L=1 |

Table 14 illustrates the information included in the first-level CSI in case that the first-level CSI is transmitted via information fields. Since 4 CSI-RS resources are configured for each port type, each field of the feedback uses 2 bits. Referring to Table 14, for the 16-port reference signal resources, the number of reported CRIs is L=1 and for the 8-port reference signal resources, the number of reported CRIs is L=1.

The information included in the second-level CSI may be referred to in Table 15 below.

**Table 15**

| | | | |
|---|---|---|---|
| CRI2 | CRI6 | RI2 | RI6 |
| Wideband CQI and 8 sub-band CQIs of TB1 corresponding to CRI2 | | | |
| Wideband CQI and 8 sub-band CQIs of TB1 corresponding to CRI6 | | | |
| Wideband parameter of PMI corresponding to CRI2 (total number of non-zero coefficients of all layers) | | | |
| Wideband parameter of PMI corresponding to CRI6 (total number of non-zero coefficients of all layers) | | | |

Referring to Table 15, the second-level CSI includes the wideband CQI and 8 sub-band CQIs of TB1 corresponding to each reference signal resource indicator, and the wideband parameter of the PMI corresponding to each reference signal resource indicator. Each CRI is fed back using 2 bits, and each RI is fed back using 1 bit.

The information included in the third-level CSI may be referred to in Table 16 below.

**Table 16**

| |
|---|
| Group 0 PMI corresponding to CRI2 |
| Group 1 PMI corresponding to CRI2 |
| Group 2 PMI corresponding to CRI2 |
| Group 0 PMI corresponding to CRI6 |
| Group 1 PMI corresponding to CRI6 |
| Group 2 PMI corresponding to CRI6 |

Referring to Table 16, for each port type, the third-level CSI includes PMIs corresponding to reference signal resource indicators of R reference signal resources respectively corresponding to the port type, where the PMIs have corresponding groupings, including Group 0, Group 1, and Group 2 respectively. As shown in Table 16, the R reference signal resource indicators respectively corresponding to each port type include CRI2 corresponding to 16-port and CRI6 corresponding to 8-port. The information included in the third-level CSI is: Group 0 PMI, Group 1 PMI, and Group 2 PMI corresponding to CRI2; and Group 0 PMI, Group 1 PMI, and Group 2 PMI corresponding to CRI6.

If an uplink resource, such as a PUSCH resource size, allocated to the terminal by the network device is sufficient, the terminal directly feeds back the above CSI to the network device.

After receiving the CSI, the network device obtains channel information corresponding to analog beams 2 and 6. According to CSI fed back by other terminals, the network device may perform MU scheduling on terminals feeding back the same analog beam.

3.2: In case that the CSI reporting configuration information indicates that a total number of reference signal resource indicators to be reported in the multiple reference signal resources is at most K, the first-level CSI includes a total number of the reference signal resource indicators to be reported, and the second-level CSI includes reference signal resource indicators of R reference signal resources.

In an embodiment, the CSI reporting configuration information is further used to indicate reporting of an RI. In case that the CSI reporting mode is the three-level reporting mode, the second-level CSI may further include M RIs other than the reference signal resource indicators of the R reference signal resources, where M is a positive integer greater than or equal to 1 and less than or equal to K.

Regardless of the number of port types of the multiple reference signal resources associated with the CSI reporting configuration information, in an embodiment, the first-level CSI includes a number of at most K (e.g., R) reference signal resource indicators, the second-level CSI includes reference signal resource indicators of R reference signal resources and may further include M RIs, and the third-level CSI includes PMIs and CQIs respectively corresponding to the reference signal resource indicators of the R reference signal resources.

In an embodiment, the first-level CSI includes the number of at most K (e.g., R) reference signal resource indicators; the second-level CSI includes the reference signal resource indicators of the R reference signal resources, M RIs, and wideband parts of PMIs and wideband parts of CQIs respectively corresponding to the reference signal resource indicators of the R reference signal resources; and the third-level CSI may include sub-band parts of the PMIs and sub-band parts of the CQIs respectively corresponding to the reference signal resource indicators of the R reference signal resources.

In an embodiment, the first-level CSI includes the number of at most K (e.g., R) reference signal resource indicators; the second-level CSI may include the reference signal resource indicators of the R reference signal resources, M RIs, and part of information of PMIs and part of information of CQIs respectively corresponding to the reference signal resource indicators of the R reference signal resources; and the third-level CSI may include another part of information of the PMIs and another part of information of the CQIs respectively corresponding to the reference signal resource indicators of the R reference signal resources.

The implementation solution of item 3.2 is described below by taking Example G as an example.

### Example G

A network device configures a terminal to perform CSI reporting. Multiple reference signal resources associated with CSI reporting configuration information include eight 16-port CSI-RS resources. Different CSI-RS resources implicitly correspond to different analog beams. Reporting quantities configured by the network device for the terminal through the CSI reporting configuration information include a CRI, an RI, a PMI, and a CQI. The PMI adopts a Rel-16 Type II codebook and is configured with sub-band CQI feedback. The CSI reporting configuration information indicates that a total number of reference signal resource indicators to be reported among the multiple reference signal resources is at most K, where K=4. Since the multiple reference signal resources are all CSI-RS resources, the corresponding reference signal resource indicators are CRIs. That is, at most 4 CRIs are reported. The CSI reporting mode is determined as a two-level reporting mode or a three-level reporting mode. In Example G, the three-level reporting mode is used as an example for description.

After receiving the CSI reporting configuration information, the terminal measures the eight 16-port CSI-RS resources. In one embodiment, the terminal measures the RSRP of each CSI-RS resource among the eight 16-port CSI-RS resources. According to the measurement results, the terminal determines that only two CSI-RS resources satisfy an RSRP threshold. The RSRP threshold may be configured by the network device or determined by the terminal itself. Therefore, the terminal determines to report two CSI-RS resources and obtains the resource indices of these two CSI-RS resources. Assuming the two results measured by the terminal are the 3rd CSI-RS resource and the 5th CSI-RS resource, the corresponding resource indices are represented as CRI3 and CRI5.

The terminal calculates the RI, PMI, and CQI corresponding to each of the two CSI-RS resources. According to the CSI reporting configuration information, sub-band reporting is adopted, and it is assumed that there are 8 sub-bands in total. Since the maximum rank of the Rel-16 Type II codebook is 2, the value of the RI is less than or equal to 2. Each CSI-RS resource corresponds to one TB, and its CQI includes one wideband CQI and 8 sub-band CQIs. By using a corresponding CSI calculation method, information included in the first-level CSI, second-level CSI, and third-level CSI may be obtained.

The first-level CSI may be transmitted via a bitmap or an information field.

Mode 1: The first-level CSI is transmitted via a bitmap. The number of bits in this part is equal to the number of CSI-RS resources associated with the reporting.

In case that the first-level CSI is transmitted via a bitmap, the information included in the first-level CSI may be referred to in Table 17 below.

**Table 17**

| | | | | | | | |
|---|---|---|---|---|---|---|---|
| 0 | 0 | 1 | 0 | 1 | 0 | 0 | 0 |

Table 17 illustrates the information included in the first-level CSI in case that the first-level CSI is transmitted via a bitmap. Since eight CSI-RS resources are configured, this bitmap uses 8 bits. Referring to Table 17, the number of reported CRIs is 2.

Mode 2: The first-level CSI is transmitted via an information field. The number of bits in this part is determined by taking the logarithm of the number of CSI-RS resources associated with the reporting.

In case that the first-level CSI is transmitted via an information field, the information included in the first-level CSI may be referred to in Table 18 below.

**Table 18**

| |
|---|
| The number of CRIs is L=2 |

Table 18 illustrates the information included in the first-level CSI in case that the first-level CSI is transmitted via an information field. Since eight CSI-RS resources are configured, this feedback uses 3 bits. Referring to Table 18, the number of reported CRIs is 2.

The information included in the second-level CSI may be referred to in Table 19 below.

**Table 19**

| | | | |
|---|---|---|---|
| CRI3 | CRI5 | RI3 | RI5 |
| Wideband CQI and 8 sub-band CQIs of TB1 corresponding to CRI3 | | | |
| Wideband CQI and 8 sub-band CQIs of TB1 corresponding to CRI5 | | | |
| Wideband parameter of PMI corresponding to CRI3 (total number of non-zero coefficients for all layers) | | | |
| Wideband parameter of PMI corresponding to CRI5 (total number of non-zero coefficients for all layers) | | | |

Referring to Table 19, the second-level CSI includes the wideband CQI and 8 sub-band CQIs of TB1 corresponding to each reference signal resource indicator, and the wideband parameter of the PMI corresponding to each reference signal resource indicator. Each CRI adopts 3-bit feedback, and each RI adopts 1-bit feedback.

The information included in the third-level CSI may be referred to in Table 20 below.

**Table 20**

| |
|---|
| Group 0 PMI corresponding to CRI3 |
| Group 1 PMI corresponding to CRI3 |
| Group 2 PMI corresponding to CRI3 |
| Group 0 PMI corresponding to CRI5 |
| Group 1 PMI corresponding to CRI5 |
| Group 2 PMI corresponding to CRI5 |

Referring to Table 20, the third-level CSI includes the PMIs corresponding to R reference signal resource indicators, where the PMIs have corresponding groupings, including Group 0, Group 1, and Group 2, respectively. Referring to Table 20, the R reference signal resource indicators include CRI3 and CRI5. The information included in the third-level CSI is: Group 0 PMI, Group 1 PMI, and Group 2 PMI corresponding to CRI3; and Group 0 PMI, Group 1 PMI, and Group 2 PMI corresponding to CRI5.

If an uplink resource, such as a PUSCH resource size, allocated to the terminal by the network device is sufficient, the terminal directly feeds back the above CSI to the network device.

After receiving the CSI, the network device obtains channel information corresponding to analog beams 3 and 5. According to CSI fed back by other terminals, terminals feeding back the same analog beam may be subjected to MU scheduling.

Regarding Example A to Example G, it is assumed that the number of reported CRIs is the same as the number of reported RIs. If multiple reported RIs have the same value, it is also possible to report only the RIs with different values. In this case, the number of reported RIs may be less than the number of reported CRIs.

S23: Transmit the CSI to the network device based on the information of each level CSI.

In S22, combined with Example A to Example G, how to determine the information of each level CSI based on the CSI reporting configuration information and the CSI reporting mode is introduced. After determining the information of each level CSI, the CSI may be transmitted to the network device based on the information of each level CSI.

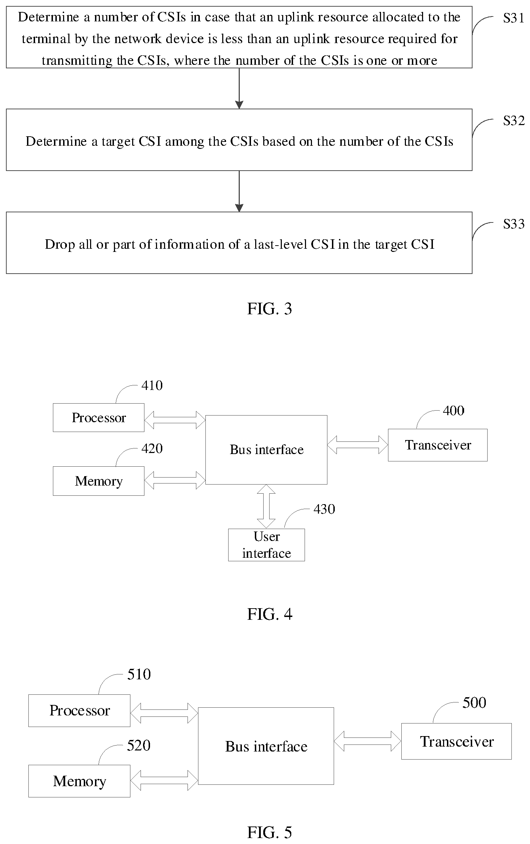

The network device allocates uplink resources to the terminal for the terminal to report the CSI. In case that an uplink resource allocated to the terminal by the network device is greater than or equal to the uplink resource required for transmitting the CSIs, the terminal reports each level CSI based on the allocated uplink resource. In case that an uplink resource allocated to the terminal by the network device is less than the uplink resource required for transmitting the CSIs, the terminal needs to drop part of the information in the CSIs. This process is introduced below in combination with FIG. 3.

FIG. 3 is a flowchart of dropping part of information in CSI according to an embodiment of the present application. As shown in FIG. 3, the process includes the following.

S31: Determine a number of CSIs in case that an uplink resource allocated to the terminal by the network device is less than an uplink resource required for transmitting the CSIs, where the number of the CSIs is one or more.

The uplink resources allocated to the terminal by the network device are used to transmit CSI. In case that an uplink resource allocated to the terminal by the network device is greater than or equal to the uplink resource required for transmitting the CSIs, the terminal transmits the CSI to the network device based on the information of each level CSI. For a two-level reporting mode, the terminal transmits the CSI to the network device based on the information of first-level CSI and the information of second-level CSI; and for a three-level reporting mode, the terminal transmits the CSI to the network device based on the information of first-level CSI, the information of second-level CSI, and the information of third-level CSI.

In case that an uplink resource allocated to the terminal by the network device is less than the uplink resource required for transmitting the CSIs, dropping part of the information in the CSI is required. In the embodiment of the present application, the number of CSIs may be one or more and the number of CSIs is required to be determined first.

S32: Determine a target CSI among the CSIs based on the number of the CSIs.

A target CSI is a CSI of which part of information is determined to be dropped among the CSIs. In case that the number of the CSIs is one, the CSI is determined as the target CSI; in case that the number of the CSIs is more than one, the terminal may determine the target CSI among multiple CSIs based on priorities of the multiple CSIs.

The priorities of the multiple CSIs may be determined by the terminal. For example, the priorities of the multiple CSIs may be determined based on a time order in which the multiple CSIs are reported, where the earlier time at which a CSI is reported, the higher a priority of the CSI, and the later time at which a CSI is reported, the lower a priority of the CSI. Based on the priorities of the multiple CSIs, a CSI with a lower priority among the multiple CSIs is determined as the target CSI. In the embodiments of the present application, the target CSI is further determined collectively based on the size of the uplink resource allocated to the terminal by the network device and the uplink resource required for transmitting each CSI.

S33: Drop all or part of information of a last-level CSI in the target CSI.

In an embodiment, in case that the CSI reporting mode is the two-level reporting mode, the last-level CSI is the second-level CSI and in case that the CSI reporting mode is the three-level reporting mode, the last-level CSI is the third-level CSI.

In an embodiment, the terminal determines respective reference signal resource indicator priorities for the first number of reference signal resource indicators included in the target CSI, and determines a second number of target reference signal resource indicators among the first number of the reference signal resource indicators based on the reference signal resource indicator priorities, where the second number is less than or equal to the first number. Information corresponding to the second number of the target reference signal resource indicators in the last-level CSI is dropped.

In an embodiment, the information corresponding to the second number of the target reference signal resource indicators in the last-level CSI may include wideband CSI, even sub-band CSI, and odd sub-band CSI, or include a PMI. For each target reference signal resource indicator, in case that the last-level CSI includes the wideband CSI, the even sub-band CSI, and the odd sub-band CSI corresponding to each target reference signal resource indicator, dropping, by the terminal, the information corresponding to the second number of the target reference signal resource indicators in the last-level CSI includes: determining respective bandwidth priorities of the wideband CSI, the even sub-band CSI, and the odd sub-band CSI, where the bandwidth priorities of the wideband CSI, the even sub-band CSI, and the odd sub-band CSI decrease in sequence; and dropping all or part of information corresponding to the target reference signal resource indicators based on the bandwidth priorities.

For any target reference signal resource indicator, the odd sub-band CSI corresponding to the target reference signal resource indicator is dropped preferentially, the even sub-band CSI corresponding to the target reference signal resource indicator is then dropped, and the wideband CSI corresponding to the target reference signal resource indicator is finally dropped. The target reference signal resource indicators may be all or part of the reference signal resource indicators included in the target CSI.

For each target reference signal resource indicator, in case that the last-level CSI includes the PMI corresponding to each target reference signal resource indicator, dropping, by the terminal, the information corresponding to the second number of the target reference signal resource indicators in the last-level CSI includes: determining priorities of PMI groups corresponding to the target reference signal resource indicators; and dropping all or part of the information corresponding to the target reference signal resource indicators based on the priorities of the PMI groups.

The PMI includes a Group 0 PMI, a Group 1 PMI, and a Group 2 PMI, and the priorities of the PMI groups of the Group 0 PMI, the Group 1 PMI, and the Group 2 PMI decrease in sequence. For any target reference signal resource indicator, the Group 2 PMI corresponding to the target reference signal resource indicator is dropped preferentially, the Group 1 PMI corresponding to the target reference signal resource indicator is then dropped, and the Group 0 PMI corresponding to the target reference signal resource indicator is finally dropped. The target reference signal resource indicators may be all or part of the reference signal resource indicators included in the target CSI.

Implementation solutions for dropping all or part of information in the last-level CSI of the target CSI are described below in conjunction with specific examples.

If an uplink resource allocated to the terminal by the network device is less than an uplink resource required for transmitting the CSIs, the terminal drops part of the information in the CSI. To ensure consistent understanding between the terminal and the network device, dropping priorities need to be defined, where a part with a lower priority is dropped preferentially. In Example H to Example K, the description is provided by taking a case where the reference signal resource indicator is a CRI and the number of CRIs included in the CSI is K as an example.

### Example H:

For the two-level reporting mode, the second-level CSI is divided into multiple priorities. For the three-level reporting mode, the third-level CSI is divided into multiple priorities. Depending on different codebook types of the reporting configuration, one embodiment is to respectively adopt the following dropping priorities.

Table 21 illustrates the dropping priorities of the second-level CSI in the two-level reporting mode or the third-level CSI in the three-level reporting mode when a Type I codebook is configured, where a smaller priority index indicates a higher priority.

**Table 21**

| Priority 0 | Priority 1 | Priority 2 |
|---|---|---|
| Wideband CSI corresponding to CRI1 | Even sub-band CSI corresponding to CRI1 | Odd sub-band CSI corresponding to CRI1 |
| Wideband CSI corresponding to CRI2 | Even sub-band CSI corresponding to CRI2 | Odd sub-band CSI corresponding to CRI2 |
| ... | ... | ... |
| Wideband CSI corresponding to CRIK | Even sub-band CSI corresponding to CRIK | Odd sub-band CSI corresponding to CRIK |

As shown in Table 21, the highest priority is priority 0, and the information with priority 0 includes the wideband CSI part corresponding to each CRI in the CSI. For example, the wideband CSI in Example B includes a wideband CQI of TB2 and a wideband PMI. The information with priority 1 includes the even sub-band CSI corresponding to each CRI in the CSI. For example, the even sub-band CSI in Example B includes an even sub-band PMI and an even sub-band CQI of TB2. The information with priority 2 includes the odd sub-band CSI corresponding to each CRI in the CSI. For example, the odd sub-band CSI in Example B includes an odd sub-band PMI and an odd sub-band CQI of TB2.

When dropping needs to be performed, information with priority 2 is dropped firstly. If the feedback overhead is still greater than the uplink resource allocated by the network device after dropping, information with priority 1 continues to be dropped, and so on.

Table 22 illustrates the dropping priorities of the second-level CSI in the two-level reporting mode or the third-level CSI in the three-level reporting mode when a Type II codebook is configured, where a smaller priority index indicates a higher priority.

**Table 22**

| Priority 0 | Priority 1 | Priority 2 |
|---|---|---|
| Group 0 PMI corresponding to CRI1 | Group 1 PMI corresponding to CRI1 | Group 2 PMI corresponding to CRI1 |
| Group 0 PMI corresponding to CRI2 | Group 1 PMI corresponding to CRI2 | Group 2 PMI corresponding to CRI2 |
| ... | ... | ... |
| Group 0 PMI corresponding to CRIK | Group 1 PMI corresponding to CRIK | Group 2 PMI corresponding to CRIK |

As shown in Table 22, the highest priority is priority 0, and the information with priority 0 includes the Group 0 PMI corresponding to each CRI in the CSI. The information with priority 1 includes the Group 1 PMI corresponding to each CRI in the CSI. The information with priority 2 includes the Group 2 PMI corresponding to each CRI in the CSI. When dropping needs to be performed, information with priority 2 is dropped firstly. If the feedback overhead is still greater than the uplink resource allocated by the network device after dropping, information with priority 1 continues to be dropped, and so on.

### Example I:

For the two-level reporting mode, the second-level CSI is divided into multiple priorities. For the three-level reporting mode, the third-level CSI is divided into multiple priorities. Depending on different codebook types of the reporting configuration, one embodiment is to respectively adopt the following dropping priorities.

Table 23 illustrates the dropping priorities of the second-level CSI in the two-level reporting mode or the third-level CSI in the three-level reporting mode when a Type I codebook is configured, where a smaller priority index indicates a higher priority.

**Table 23**

| Priority 0 | Priority 1 | Priority 2 | Priority 3 |
|---|---|---|---|
| Wideband CSI corresponding to CRI1 | Even sub-band CSI corresponding to CRI1 | Odd sub-band CSI corresponding to CRI1 | Even sub-band CSI corresponding to CRI2 |
| Wideband CSI corresponding to CRI2 | | | |
| ... | | | |
| Wideband CSI corresponding to CRIK | | | |

| Priority 4 | ... | Priority 2K-1 | Priority 2K |
|---|---|---|---|
| Odd sub-band CSI corresponding to CRI2 | ... | Even sub-band CSI corresponding to CRIK | Odd sub-band CSI corresponding to CRIK |

As shown in Table 23, the highest priority is priority 0, and the information with priority 0 includes the wideband CSI corresponding to each CRI in the CSI. For example, the wideband CSI in Example B includes a wideband CQI of TB2 and a wideband PMI. The information with priority 1 includes the even sub-band CSI corresponding to the first CRI in the CSI. The information with priority 2 includes the odd sub-band CSI corresponding to the first CRI in the CSI. The information with priority 3 includes the even sub-band CSI corresponding to the second CRI in the CSI. The information with priority 4 includes the odd sub-band CSI corresponding to the second CRI in the CSI, and so on. During the dropping process, information with a lower priority is dropped preferentially.

Table 24 illustrates the dropping priorities of the second-level CSI in the two-level reporting mode or the third-level CSI in the three-level reporting mode when a Type II codebook is configured, where a smaller priority index indicates a higher priority.

**Table 24**

| Priority 0 | Priority 1 | Priority 2 | Priority 3 |
|---|---|---|---|
| Group 0 PMI corresponding to CRI1 | Group 1 PMI corresponding to CRI1 | Group 2 PMI corresponding to CRI1 | Group 1 PMI corresponding to CRI2 |
| Group 0 PMI corresponding to CRI2 | | | |
| ... | | | |
| Group 0 PMI corresponding to CRIK | | | |

| Priority 4 | ... | Priority 2K-1 | Priority 2K |
|---|---|---|---|
| Group 2 PMI corresponding to CRI2 | ... | Group 1 PMI corresponding to CRIK | Group 2 PMI corresponding to CRIK |

As shown in Table 24, the highest priority is priority 0, and the information with priority 0 includes the Group 0 PMI corresponding to each CRI in the CSI. The information with Priority 1 includes the Group 1 PMI corresponding to the first CRI in the CSI. The information with priority 2 includes the Group 2 PMI corresponding to the first CRI in the CSI. The information with priority 3 includes the Group 1 PMI corresponding to the second CRI in the CSI. The information with priority 4 includes the Group 2 PMI corresponding to the second CRI in the CSI, and so on. During the dropping process, information with a lower priority is dropped preferentially.

### Example J:

For the two-level reporting mode, the second-level CSI is divided into multiple priorities. For the three-level reporting mode, the third-level CSI is divided into multiple priorities. Depending on different codebook types of the reporting configuration, one embodiment is to respectively adopt the following dropping priorities.

Table 25 illustrates the dropping priorities of the second-level CSI in the two-level reporting mode or the third-level CSI in the three-level reporting mode when a Type I codebook is configured, where a smaller priority index indicates a higher priority.

**Table 25**

| Priority 0 | Priority 1 | ... | Priority K |
|---|---|---|---|
| CSI corresponding to CRI1 | CSI corresponding to CRI2 | ... | CSI corresponding to CRIK |

As shown in Table 25, the highest priority is priority 0, and the information with priority 0 includes all CSI corresponding to the first reported CRI. For example, the wideband PMI and the wideband CQI, the even sub-band CSI, and the odd sub-band CSI of TB2 in Example B. The information with priority 1 includes all CSI corresponding to the second reported CRI. Priority 2 includes all CSI corresponding to the third reported CRI, and so on. In this mode, dropping is performed according to the order in which CRIs are reported, and the CSI corresponding to a CRI ranked later is dropped firstly.

Table 26 illustrates the dropping priorities of the second-level CSI in the two-level reporting mode or the third-level CSI in the three-level reporting mode when a Type II codebook is configured, where a smaller priority index indicates a higher priority.

**Table 26**

| Priority 0 | Priority 1 | Priority 2 | Priority 3 | Priority 4 |
|---|---|---|---|---|
| Group 0 PMI corresponding to CRI1 | Group 1 PMI corresponding to CRI1 | Group 2 PMI corresponding to CRI1 | Group 0 PMI corresponding to CRI2 | Group 1 PMI corresponding to CRI2 |

| Priority 5 | ... | Priority 3(K-1) | Priority 3(K-1)+1 | Priority 3(K-1)+2 |
|---|---|---|---|---|
| Group 2 PMI corresponding to CRI2 | ... | Group 0 PMI corresponding to CRIK | Group 1 PMI corresponding to CRIK | Group 2 PMI corresponding to CRIK |

As shown in Table 26, the highest priority is Priority 0, and the information with priority 0 includes the Group 0 PMI corresponding to the first reported CRI. The information with priority 1 includes the Group 1 PMI corresponding to the first reported CRI. The information with priority 2 includes the Group 2 PMI corresponding to the first reported CRI. The information with priority 3 includes the Group 0 PMI corresponding to the second reported CRI. The information with priority 4 includes the Group 1 PMI corresponding to the second reported CRI. The information with priority 5 includes the Group 2 PMI corresponding to the second reported CRI, and so on. During the dropping process, information with a lower priority is dropped preferentially.

### Example K:

Examples H to J illustrate the implementation solutions for dropping all or part of information in the last-level CSI of CSI in case that the number of reported CSIs is one. When multiple CSIs are reported simultaneously, the priorities among the multiple CSI reports need to be further considered.

Table 27 illustrates the dropping priorities of the second-level CSI in the two-level reporting mode or the third-level CSI in the three-level reporting mode when N CSIs are reported and a Type I codebook is configured, where a smaller priority index indicates a higher priority.

**Table 27**

| Priority 0 | Priority 1 | Priority 2 | Priority 3 |
|---|---|---|---|
| Wideband CSI corresponding to each CRI in the 1st reported CSI | Even sub-band CSI corresponding to each CRI in the 1st reported CSI | Odd sub-band CSI corresponding to each CRI in the 1st reported CSI | Even sub-band CSI corresponding to each CRI in the 2nd reported CSI |
| Wideband CSI corresponding to each CRI in the 2nd reported CSI | | | |
| ... | | | |
| Wideband CSI corresponding to each CRI in the Nth reported CSI | | | |

| Priority 4 | ... | Priority 2N-1 | Priority 2N |
|---|---|---|---|
| Odd sub-band CSI corresponding to each CRI in the 2nd reported CSI | ... | Even sub-band CSI corresponding to each CRI in the Nth reported CSI | Odd sub-band CSI corresponding to each CRI in the Nth reported CSI |

As shown in Table 27, the highest priority is priority 0, and the information with priority 0 includes the wideband CSI corresponding to each CRI in each reported CSI. The information with priority 1 includes the even sub-band CSI corresponding to each CRI in the 1st reported CSI. The information with priority 2 includes the odd sub-band CSI corresponding to each CRI in the 1st reported CSI. The information with priority 3 includes the even sub-band CSI corresponding to each CRI in the 2nd reported CSI. The information with priority 4 includes the odd sub-band CSI corresponding to each CRI in the 2nd reported CSI, and so on. During the dropping process, information with a lower priority is dropped preferentially.

Table 28 illustrates the dropping priorities of the second-level CSI in the two-level reporting mode or the third-level CSI in the three-level reporting mode when N CSIs are reported and a Type II codebook is configured, where a smaller priority index indicates a higher priority.

**Table 28**

| Priority 0 | Priority 1 | Priority 2 | Priority 3 |
|---|---|---|---|
| Group 0 PMI corresponding to each CRI in the 1st reported CSI | Group 1 PMI corresponding to each CRI in the 1st reported CSI | Group 2 PMI corresponding to each CRI in the 1st reported CSI | Group 1 PMI corresponding to each CRI in the 2nd reported CSI |
| Group 0 PMI corresponding to each CRI in the 2nd reported CSI | | | |
| ... | | | |
| Group 0 PMI corresponding to each CRI in the Nth reported CSI | | | |

| Priority 4 | ... | Priority 2N-1 | Priority 2N |
|---|---|---|---|
| Group 2 PMI corresponding to each CRI in the 2nd reported CSI | ... | Group 1 PMI corresponding to each CRI in the Nth reported CSI | Group 2 PMI corresponding to each CRI in the Nth reported CSI |

As shown in Table 28, the highest priority is priority 0, and the information with priority 0 includes the Group 0 PMI corresponding to each CRI in each reported CSI. The information with priority 1 includes the Group 1 PMI corresponding to each CRI in the 1st reported CSI. The information with priority 2 includes the Group 2 PMI corresponding to each CRI in the 1st reported CSI. The information with priority 3 includes the Group 1 PMI corresponding to each CRI in the 2nd reported CSI. The information with priority 4 includes the Group 2 PMI corresponding to each CRI in the 2nd reported CSI, and so on. During the dropping process, information with a lower priority is dropped preferentially.

Table 29 illustrates the dropping priorities of the second-level CSI in the two-level reporting mode or the third-level CSI in the three-level reporting mode when N CSIs are reported and a Type II codebook is configured, where a smaller priority index indicates a higher priority.

**Table 29**

| | |
|---|---|
| Priority 0 | Group 0 PMI corresponding to each CRI in the 1st reported CSI |
| | Group 0 PMI corresponding to each CRI in the 2nd reported CSI |
| | ... |
| | Group 0 PMI corresponding to each CRI in the Nth reported CSI |
| Priority 1 | Group 1 PMI corresponding to CRI1 in the 1st reported CSI |
| Priority 2 | Group 2 PMI corresponding to CRI1 in the 1st reported CSI |
| Priority 3 | Group 1 PMI corresponding to CRI2 in the 1st reported CSI |
| Priority 4 | Group 2 PMI corresponding to CRI2 in the 1st reported CSI |
| ... | |
| Priority 2K-1 | Group 1 PMI corresponding to CRI K in the 1st reported CSI |
| Priority 2K | Group 2 PMI corresponding to CRI K in the 1st reported CSI |
| Priority 2K+1 | Group 1 PMI corresponding to CRI1 in the 2nd reported CSI |
| Priority 2K+2 | Group 2 PMI corresponding to CRI1 in the 2nd reported CSI |
| ... | ... |
| Priority 2KN-1 | Group 1 PMI corresponding to CRI K in the Nth reported CSI |
| Priority 2KN | Group 2 PMI corresponding to CRI K in the Nth reported CSI |
| | |

As shown in Table 29, the highest priority is priority 0, and the information with priority 0 includes the Group 0 PMI corresponding to each CRI in each reported CSI. The information with priority 1 includes the Group 1 PMI corresponding to the 1st CRI in the 1st reported CSI. The information with priority 2 includes the Group 2 PMI corresponding to the 1st CRI in the 1st reported CSI. The information with priority 3 includes the Group 1 PMI part corresponding to the 2nd CRI in the 1st reported CSI. The information with priority 4 includes the Group 2 PMI part corresponding to the 2nd CRI in the 1st reported CSI, and so on. During the dropping process, information with a lower priority is prioritized for dropping.

According to the embodiments of the present application, CSI may be reported via the two-level reporting mode or the three-level reporting mode, CSI channel characteristics corresponding to multiple analog beams are fed back in a single CSI report, and CSI reporting in scenarios where the number of analog beams reported by the terminal is unknown to the network device is supported, improving the flexibility of CSI reporting. By setting corresponding priorities, part of information of the CSI may be dropped when uplink resources allocated by the network device are insufficient, CSI reporting at different uplink resource conditions is supported, the network device is allowed to flexibly implement MU pairing transmission at different analog beams.

FIG. 4 is a schematic structural diagram of a terminal according to an embodiment of the present application, as shown in FIG. 4, the terminal includes a memory 420, a transceiver 400, and a processor 410, where the memory 420 is used for storing a computer program; the transceiver 400 is used for transmitting and receiving data under control of the processor; and the processor 410 is used for reading the computer program in the memory 420 and performing the following operations:
receiving CSI reporting configuration information transmitted from a network device, where the CSI reporting configuration information is associated with multiple reference signal resources;
measuring the multiple reference signal resources to obtain respective measurement results of the multiple reference signal resources, where the measurement results include reference signal resource indicators; and
transmitting CSI to the network device based on the CSI reporting configuration information and the respective measurement results of the multiple reference signal resources, where the CSI includes a first number of reference signal resource indicators, and the first number is at least two.

In FIG. 4, a bus architecture may include any number of interconnected buses and bridges, which are linked together through various circuits of one or more processors represented by the processor 410 and one or more memories represented by the memory 420. The bus architecture may also link together various other circuits, such as peripherals, voltage regulators, and power management circuits, which are well known in the art, and therefore will not be further described in the present application. The bus interface provides an interface. The transceiver 400 may be multiple elements, i.e., including a transmitter and a receiver, units for providing communication with various other devices over transmission media including wireless channels, wired channels, fiber optic cables, and the like. For different UEs, the user interface 430 may also be an interface capable of externally or internally connecting to required devices, where connected devices include but are not limited to a keypad, a display, a speaker, a microphone, a joystick, and the like.

The processor 410 is responsible for managing the bus architecture and general processing, and the memory 420 may store data used by the processor 400 when performing operations.

The processor 410 may be a central processing unit (CPU), an application specific integrated circuit (ASIC), a field-programmable gate array (FPGA), or a complex programmable logic device (CPLD), and the processor may also use a multi-core architecture.

The processor, by executing a computer program stored in the memory, is configured to perform any of the methods provided in the embodiments of the present application in accordance with obtained executable instructions. The processor and the memory may also be physically separated.

In some embodiments, transmitting the CSI to the network device based on the CSI reporting configuration information and the respective measurement results of the multiple reference signal resources includes:
determining a CSI reporting mode based on the CSI reporting configuration information, where the CSI reporting mode includes a two-level reporting mode or a three-level reporting mode;
determining information of each level CSI in the respective measurement results of the multiple reference signal resources based on the CSI reporting configuration information and the CSI reporting mode; and
transmitting the CSI to the network device based on the information of each level CSI.

In some embodiments, the CSI reporting configuration information is used to indicate any of:
for each port type, a number of reference signal resource indicators to be reported in the reference signal resources respectively corresponding to each port type is K, where K is a positive integer greater than 1;
a total number of reference signal resource indicators to be reported in the multiple reference signal resources is K, where K is a positive integer greater than 1;
for each port type, a number of reference signal resource indicators to be reported in the reference signal resources respectively corresponding to each port type is at most K, where K is a positive integer greater than 1; or
a total number of reference signal resource indicators to be reported in the multiple reference signal resources is at most K, where K is a positive integer greater than 1.

In some embodiments, the CSI reporting mode is the two-level reporting mode in case that the CSI reporting configuration information indicates that for each port type, the number of the reference signal resource indicators to be reported in the reference signal resources respectively corresponding to each port type is K or indicates that the total number of the reference signal resource indicators to be reported in the multiple reference signal resources is K; or,
the CSI reporting mode is the two-level reporting mode or the three-level reporting mode in case that the CSI reporting configuration information indicates that for each port type, the number of the reference signal resource indicators to be reported in the reference signal resources respectively corresponding to each port type is at most K or indicates that the total number of the reference signal resource indicators to be reported in the multiple reference signal resources is at most K.

In some embodiments, in case that the CSI reporting mode is the two-level reporting mode, a first-level CSI in the two-level reporting mode satisfies any of:
for each port type, the first-level CSI includes reference signal resource indicators of K reference signal resources respectively corresponding to each port type in case that the CSI reporting configuration information indicates that for each port type, the number of the reference signal resource indicators to be reported in the reference signal resources respectively corresponding to each port type is K;
the first-level CSI includes reference signal resource indicators of K reference signal resources in case that the CSI reporting configuration information indicates that the total number of the reference signal resource indicators to be reported in the multiple reference signal resources is K;
for each port type, the first-level CSI includes reference signal resource indicators of R reference signal resources respectively corresponding to each port type in case that the CSI reporting configuration information indicates that for each port type, the number of the reference signal resource indicators to be reported in the reference signal resources respectively corresponding to each port type is at most K, where R is a positive integer greater than or equal to 1 and less than or equal to K; or
the first-level CSI includes reference signal resource indicators of R reference signal resources in case that the CSI reporting configuration information indicates that the total number of reference signal resource indicators to be reported in the multiple reference signal resources is at most K, where R is a positive integer greater than or equal to 1 and less than or equal to K.

In some embodiments, in case that the CSI reporting configuration information indicates that for each port type, the number of the reference signal resource indicators to be reported in the reference signal resources respectively corresponding to each port type is at most K, or indicates that the total number of the reference signal resource indicators to be reported in the multiple reference signal resources is at most K, for the first-level CSI, transmitting the CSI to the network device based on the information of each level CSI includes:
transmitting the first-level CSI to the network device based on a bitmap, where a number of bits in the bitmap is determined based on a number of the multiple reference signal resources; and/or,
transmitting the first-level CSI to the network device based on multiple information fields, where a number of the multiple information fields is determined based on the number of the reference signal resource indicators included in the CSI.

In some embodiments, in case that the CSI reporting mode is the three-level reporting mode, a first-level CSI and a second-level CSI in the three-level reporting mode satisfy any of:
for each port type, the first-level CSI includes the number of the reference signal resource indicators to be reported in the reference signal resources respectively corresponding to each port type and the second-level CSI includes reference signal resource indicators of R reference signal resources respectively corresponding to each port type in case that the CSI reporting configuration information indicates that for each port type, the number of the reference signal resource indicators to be reported in the reference signal resources respectively corresponding to each port type is at most K, where R is a positive integer greater than or equal to 1 and less than or equal to K; or
the first-level CSI includes the total number of the reference signal resource indicators to be reported and the second-level CSI includes reference signal resource indicators of R reference signal resources in case that the CSI reporting configuration information indicates that the total number of the reference signal resource indicators to be reported in the multiple reference signal resources is at most K, where R is a positive integer greater than or equal to 1 and less than or equal to K.

In some embodiments, the CSI reporting configuration information is further used to indicate reporting of a rank indicator,
where the first-level CSI further includes M rank indicators in case that the CSI reporting mode is the two-level reporting mode and M is a positive integer greater than or equal to 1 and less than or equal to K; or
the second-level CSI further includes M rank indicators in case that the CSI reporting mode is the three-level reporting mode and M is a positive integer greater than or equal to 1 and less than or equal to K.

In some embodiments, the processor is further used for:
determining a number of CSIs in case that an uplink resource allocated to the terminal by the network device is less than an uplink resource required for transmitting the CSIs, where the number of the CSIs is one or more;
determining a target CSI among the CSIs based on the number of the CSIs; and
dropping all or part of information in a last-level CSI of the target CSI, where the last-level CSI is the second-level CSI in case that the CSI reporting mode is the two-level reporting mode and the last-level CSI is the third-level CSI in case that the CSI reporting mode is the three-level reporting mode.

In some embodiments, determining the target CSI among the CSIs based on the number of the CSIs includes:
determining the CSI as the target CSI in case that the number of the CSIs is one; or
determining the target CSI among multiple CSIs based on priorities of the multiple CSIs in case that the number of the CSIs is more than one.

In some embodiments, dropping all or part of information in the last-level CSI of the target CSI includes:
determining respective reference signal resource indicator priorities for the first number of reference signal resource indicators included in the target CSI;
determining a second number of target reference signal resource indicators among the first number of the reference signal resource indicators based on the reference signal resource indicator priorities, where the second number is less than or equal to the first number; and
dropping information corresponding to the second number of the target reference signal resource indicators in the last-level CSI.

In some embodiments, for each target reference signal resource indicator, dropping the information corresponding to the second number of the target reference signal resource indicators in the last-level CSI includes:
determining respective bandwidth priorities of wideband CSI, even sub-band CSI, and odd sub-band CSI and dropping all or part of the information corresponding to the target reference signal resource indicators based on the bandwidth priorities, where the bandwidth priorities of the wideband CSI, the even sub-band CSI, and the odd sub-band CSI decrease in sequence; or
determining priorities of precoding matrix indicator (PMI) groups corresponding to the target reference signal resource indicators and dropping all or part of the information corresponding to the target reference signal resource indicators based on the priorities of the PMI groups.

In an embodiment, the terminal provided in embodiments of the present application may implement all the method steps implemented by the method embodiment with the terminal as the executing subject, and may achieve the same effects. Therefore, the same parts and beneficial effects as the method embodiment in this embodiment will not be described here.

FIG. 5 is a schematic structural diagram of a network device according to an embodiment of the present application, as shown in FIG. 5, the network device includes a memory 520, a transceiver 500, and a processor 510, where
the memory 520 is used for storing a computer program; the transceiver 500 is used for transmitting and receiving data under control of the processor 510; and the processor 510 is used for reading the computer program in the memory 520 and performing the following operations:
transmitting CSI reporting configuration information to a terminal, where the CSI reporting configuration information is associated with multiple reference signal resources;
receiving CSI transmitted from the terminal based on the CSI reporting configuration information, where the CSI includes a first number of reference signal resource indicators, and the first number is at least two.

In FIG. 5, a bus architecture may include any number of interconnected buses and bridges, which are linked together through various circuits of one or more processors represented by the processor 510 and one or more memories represented by the memory 520. The bus architecture may also link together various other circuits, such as peripherals, voltage regulators, and power management circuits, which are well known in the art, and therefore will not be further described in the present application. The bus interface provides an interface. The transceiver 500 may be multiple elements, i.e., including a transmitter and a receiver, units for providing communication with various other devices over transmission media including wireless channels, wired channels, fiber optic cables, and the like. The processor 510 is responsible for managing the bus architecture and general processing, and the memory 520 may store data used by the processor 510 when performing operations.

The processor 510 may be a CPU, an ASIC, an FPGA, or a CPLD, and the processor may also use a multi-core architecture.

The processor, by executing a computer program stored in the memory, is configured to perform any of the methods provided in the embodiments of the present application in accordance with obtained executable instructions. The processor and the memory may also be physically separated.

In some embodiments, the CSI reporting configuration information is used to determine a CSI reporting mode and information of each level CSI, and receiving the CSI transmitted from the terminal based on the CSI reporting configuration information includes:
receiving the CSI transmitted from the terminal based on the information of each level CSI, where the CSI reporting mode includes a two-level reporting mode or a three-level reporting mode.

In some embodiments, the CSI reporting configuration information is used to indicate any of:
for each port type, a number of reference signal resource indicators to be reported in the reference signal resources respectively corresponding to each port type is K, where K is a positive integer greater than 1;
a total number of reference signal resource indicators to be reported in the multiple reference signal resources is K, where K is a positive integer greater than 1;
for each port type, a number of reference signal resource indicators to be reported in the reference signal resources respectively corresponding to each port type is at most K, where K is a positive integer greater than 1; or
a total number of reference signal resource indicators to be reported in the multiple reference signal resources is at most K, where K is a positive integer greater than 1.

In some embodiments, the CSI reporting mode is the two-level reporting mode in case that the CSI reporting configuration information indicates that for each port type, the number of the reference signal resource indicators to be reported in the reference signal resources respectively corresponding to each port type is K or indicates that the total number of the reference signal resource indicators to be reported in the multiple reference signal resources is K; or,
the CSI reporting mode is the two-level reporting mode or the three-level reporting mode in case that the CSI reporting configuration information indicates that for each port type, the number of the reference signal resource indicators to be reported in the reference signal resources respectively corresponding to each port type is at most K or indicates that the total number of the reference signal resource indicators to be reported in the multiple reference signal resources is at most K.

In some embodiments, in case that the CSI reporting mode is the two-level reporting mode, a first-level CSI in the two-level reporting mode satisfies any of:
for each port type, the first-level CSI includes reference signal resource indicators of K reference signal resources respectively corresponding to each port type in case that the CSI reporting configuration information indicates that for each port type, the number of the reference signal resource indicators to be reported in the reference signal resources respectively corresponding to each port type is K;
the first-level CSI includes reference signal resource indicators of K reference signal resources in case that the CSI reporting configuration information indicates that the total number of the reference signal resource indicators to be reported in the multiple reference signal resources is K;
for each port type, the first-level CSI includes reference signal resource indicators of R reference signal resources respectively corresponding to each port type in case that the CSI reporting configuration information indicates that for each port type, the number of the reference signal resource indicators to be reported in the reference signal resources respectively corresponding to each port type is at most K, where R is a positive integer greater than or equal to 1 and less than or equal to K; or
the first-level CSI includes reference signal resource indicators of R reference signal resources in case that the CSI reporting configuration information indicates that the total number of reference signal resource indicators to be reported in the multiple reference signal resources is at most K, where R is a positive integer greater than or equal to 1 and less than or equal to K.

In some embodiments, in case that the CSI reporting configuration information indicates that for each port type, the number of the reference signal resource indicators to be reported in the reference signal resources respectively corresponding to each port type is at most K, or indicates that the total number of the reference signal resource indicators to be reported in the multiple reference signal resources is at most K, for the first-level CSI, receiving the CSI transmitted from the terminal based on the information of each level CSI includes:
receiving the first-level CSI transmitted from the terminal based on a bitmap, where a number of bits in the bitmap is determined based on a number of the multiple reference signal resources; and/or,
receiving the first-level CSI transmitted from the terminal based on multiple information fields, where a number of the multiple information fields is determined based on the number of the reference signal resource indicators included in the CSI.

In some embodiments, in case that the CSI reporting mode is the three-level reporting mode, a first-level CSI and a second-level CSI in the three-level reporting mode satisfy any of:
for each port type, the first-level CSI includes the number of the reference signal resource indicators to be reported in the reference signal resources respectively corresponding to each port type and the second-level CSI includes reference signal resource indicators of R reference signal resources respectively corresponding to each port type in case that the CSI reporting configuration information indicates that for each port type, the number of the reference signal resource indicators to be reported in the reference signal resources respectively corresponding to each port type is at most K, where R is a positive integer greater than or equal to 1 and less than or equal to K; or
the first-level CSI includes the total number of the reference signal resource indicators to be reported and the second-level CSI includes reference signal resource indicators of R reference signal resources in case that the CSI reporting configuration information indicates that the total number of the reference signal resource indicators to be reported in the multiple reference signal resources is at most K, where R is a positive integer greater than or equal to 1 and less than or equal to K.

In some embodiments, the CSI reporting configuration information is further used to indicate reporting of a rank indicator,
where the first-level CSI further includes M rank indicators in case that the CSI reporting mode is the two-level reporting mode and M is a positive integer greater than or equal to 1 and less than or equal to K; or
the second-level CSI further includes M rank indicators in case that the CSI reporting mode is the three-level reporting mode and M is a positive integer greater than or equal to 1 and less than or equal to K.

In an embodiment, the network device provided in embodiments of the present application may implement all the method steps implemented by the method embodiment with the network device as the executing subject, and may achieve the same effects. Therefore, the same parts and beneficial effects as the method embodiment in this embodiment will not be described here.

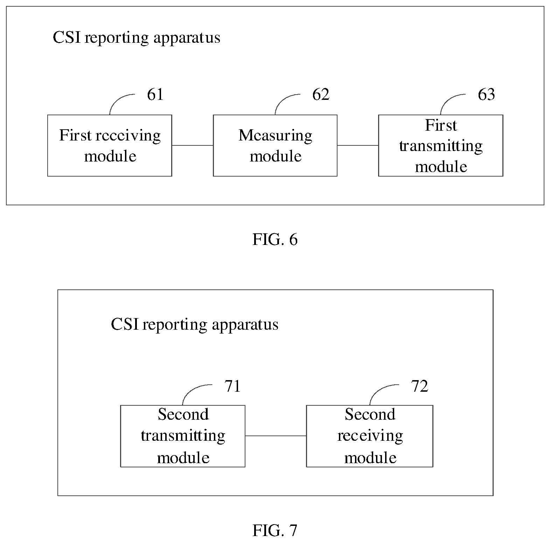

FIG. 6 is a first schematic structural diagram of an apparatus for channel state information (CSI) reporting according to an embodiment of the present application. As shown in FIG. 6, the apparatus includes:
a first receiving module 61, used for receiving CSI reporting configuration information transmitted from a network device, where the CSI reporting configuration information is associated with multiple reference signal resources;
a measuring module 62, used for measuring the multiple reference signal resources to obtain respective measurement results of the multiple reference signal resources, where the measurement results include reference signal resource indicators; and
a first transmitting module 63, used for transmitting CSI to the network device based on the CSI reporting configuration information and the respective measurement results of the multiple reference signal resources, where the CSI includes a first number of reference signal resource indicators, and the first number is at least two.

In some embodiments, the first transmitting module 63 is further used for:
determining a CSI reporting mode based on the CSI reporting configuration information, where the CSI reporting mode includes a two-level reporting mode or a three-level reporting mode;
determining information of each level CSI in the respective measurement results of the multiple reference signal resources based on the CSI reporting configuration information and the CSI reporting mode; and
transmitting the CSI to the network device based on the information of each level CSI.

In some embodiments, the CSI reporting configuration information is used to indicate any of:
for each port type, a number of reference signal resource indicators to be reported in the reference signal resources respectively corresponding to each port type is K, where K is a positive integer greater than 1;
a total number of reference signal resource indicators to be reported in the multiple reference signal resources is K, where K is a positive integer greater than 1;
for each port type, a number of reference signal resource indicators to be reported in the reference signal resources respectively corresponding to each port type is at most K, where K is a positive integer greater than 1; or
a total number of reference signal resource indicators to be reported in the multiple reference signal resources is at most K, where K is a positive integer greater than 1.

In some embodiments, the CSI reporting mode is the two-level reporting mode in case that the CSI reporting configuration information indicates that for each port type, the number of the reference signal resource indicators to be reported in the reference signal resources respectively corresponding to each port type is K or indicates that the total number of the reference signal resource indicators to be reported in the multiple reference signal resources is K; or,
the CSI reporting mode is the two-level reporting mode or the three-level reporting mode in case that the CSI reporting configuration information indicates that for each port type, the number of the reference signal resource indicators to be reported in the reference signal resources respectively corresponding to each port type is at most K or indicates that the total number of the reference signal resource indicators to be reported in the multiple reference signal resources is at most K.

In some embodiments, in case that the CSI reporting mode is the two-level reporting mode, a first-level CSI in the two-level reporting mode satisfies any of:
for each port type, the first-level CSI includes reference signal resource indicators of K reference signal resources respectively corresponding to each port type in case that the CSI reporting configuration information indicates that for each port type, the number of the reference signal resource indicators to be reported in the reference signal resources respectively corresponding to each port type is K;
the first-level CSI includes reference signal resource indicators of K reference signal resources in case that the CSI reporting configuration information indicates that the total number of the reference signal resource indicators to be reported in the multiple reference signal resources is K;
for each port type, the first-level CSI includes reference signal resource indicators of R reference signal resources respectively corresponding to each port type in case that the CSI reporting configuration information indicates that for each port type, the number of the reference signal resource indicators to be reported in the reference signal resources respectively corresponding to each port type is at most K, where R is a positive integer greater than or equal to 1 and less than or equal to K; or
the first-level CSI includes reference signal resource indicators of R reference signal resources in case that the CSI reporting configuration information indicates that the total number of reference signal resource indicators to be reported in the multiple reference signal resources is at most K, where R is a positive integer greater than or equal to 1 and less than or equal to K.

In some embodiments, in case that the CSI reporting configuration information indicates that for each port type, the number of the reference signal resource indicators to be reported in the reference signal resources respectively corresponding to each port type is at most K, or indicates that the total number of the reference signal resource indicators to be reported in the multiple reference signal resources is at most K, for the first-level CSI, the first transmitting module 63 is further used for:
transmitting the first-level CSI to the network device based on a bitmap, where a number of bits in the bitmap is determined based on a number of the multiple reference signal resources; and/or,
transmitting the first-level CSI to the network device based on multiple information fields, where a number of the multiple information fields is determined based on the number of the reference signal resource indicators included in the CSI.

In some embodiments, in case that the CSI reporting mode is the three-level reporting mode, a first-level CSI and a second-level CSI in the three-level reporting mode satisfy any of:
for each port type, the first-level CSI includes the number of the reference signal resource indicators to be reported in the reference signal resources respectively corresponding to each port type and the second-level CSI includes reference signal resource indicators of R reference signal resources respectively corresponding to each port type in case that the CSI reporting configuration information indicates that for each port type, the number of the reference signal resource indicators to be reported in the reference signal resources respectively corresponding to each port type is at most K, where R is a positive integer greater than or equal to 1 and less than or equal to K; or
the first-level CSI includes the total number of the reference signal resource indicators to be reported and the second-level CSI includes reference signal resource indicators of R reference signal resources in case that the CSI reporting configuration information indicates that the total number of the reference signal resource indicators to be reported in the multiple reference signal resources is at most K, where R is a positive integer greater than or equal to 1 and less than or equal to K.

In some embodiments, the CSI reporting configuration information is further used to indicate reporting of a rank indicator,
where the first-level CSI further includes M rank indicators in case that the CSI reporting mode is the two-level reporting mode and M is a positive integer greater than or equal to 1 and less than or equal to K; or
the second-level CSI further includes M rank indicators in case that the CSI reporting mode is the three-level reporting mode and M is a positive integer greater than or equal to 1 and less than or equal to K.

In some embodiments, the first transmitting module 63 is further used for:
determining a number of CSIs in case that an uplink resource allocated to the terminal by the network device is less than an uplink resource required for transmitting the CSIs, where the number of the CSIs is one or more;
determining a target CSI among the CSIs based on the number of the CSIs; and
dropping all or part of information in a last-level CSI of the target CSI, where the last-level CSI is the second-level CSI in case that the CSI reporting mode is the two-level reporting mode and the last-level CSI is the third-level CSI in case that the CSI reporting mode is the three-level reporting mode.

In some embodiments, the first transmitting module 63 is further used for:
determining the CSI as the target CSI in case that the number of the CSIs is one; or
determining the target CSI among multiple CSIs based on priorities of the multiple CSIs in case that the number of the CSIs is more than one.

In some embodiments, the first transmitting module 63 is further used for:
determining respective reference signal resource indicator priorities for the first number of reference signal resource indicators included in the target CSI;
determining a second number of target reference signal resource indicators among the first number of the reference signal resource indicators based on the reference signal resource indicator priorities, where the second number is less than or equal to the first number; and
dropping information corresponding to the second number of the target reference signal resource indicators in the last-level CSI.

In some embodiments, the first transmitting module 63 is further used for:
determining respective bandwidth priorities of wideband CSI, even sub-band CSI, and odd sub-band CSI and dropping all or part of the information corresponding to the target reference signal resource indicators based on the bandwidth priorities, where the bandwidth priorities of the wideband CSI, the even sub-band CSI, and the odd sub-band CSI decrease in sequence; or
determining priorities of precoding matrix indicator (PMI) groups corresponding to the target reference signal resource indicators and dropping all or part of the information corresponding to the target reference signal resource indicators based on the priorities of the PMI groups.

It should be noted that the aforementioned apparatus provided in the embodiments of the present application is capable of executing all the method steps realized by the method embodiments in which the aforementioned execution entity is a terminal, and is capable of achieving the same effects; therefore, the parts of this embodiment that are identical to those of the method embodiments, as well as the beneficial effects thereof, will not be described in further detail herein.

FIG. 7 is a second schematic structural diagram of an apparatus for channel state information (CSI) reporting according to an embodiment of the present application. As shown in FIG. 7, the apparatus includes:
a second transmitting module 71, used for transmitting CSI reporting configuration information to a terminal, where the CSI reporting configuration information is associated with multiple reference signal resources;
a second receiving module 72, used for receiving CSI transmitted from the terminal based on the CSI reporting configuration information, where the CSI includes a first number of reference signal resource indicators, and the first number is at least two.

In some embodiments, the CSI reporting configuration information is used to determine a CSI reporting mode and information of each level CSI, and the second receiving module 72 is further used for:
receiving the CSI transmitted from the terminal based on the information of each level CSI, where the CSI reporting mode includes a two-level reporting mode or a three-level reporting mode.

In some embodiments, the CSI reporting configuration information is used to indicate any of:
for each port type, a number of reference signal resource indicators to be reported in the reference signal resources respectively corresponding to each port type is K, where K is a positive integer greater than 1;
a total number of reference signal resource indicators to be reported in the multiple reference signal resources is K, where K is a positive integer greater than 1;
for each port type, a number of reference signal resource indicators to be reported in the reference signal resources respectively corresponding to each port type is at most K, where K is a positive integer greater than 1; or
a total number of reference signal resource indicators to be reported in the multiple reference signal resources is at most K, where K is a positive integer greater than 1.

In some embodiments, the CSI reporting mode is the two-level reporting mode in case that the CSI reporting configuration information indicates that for each port type, the number of the reference signal resource indicators to be reported in the reference signal resources respectively corresponding to each port type is K or indicates that the total number of the reference signal resource indicators to be reported in the multiple reference signal resources is K; or,
the CSI reporting mode is the two-level reporting mode or the three-level reporting mode in case that the CSI reporting configuration information indicates that for each port type, the number of the reference signal resource indicators to be reported in the reference signal resources respectively corresponding to each port type is at most K or indicates that the total number of the reference signal resource indicators to be reported in the multiple reference signal resources is at most K.

In some embodiments, in case that the CSI reporting mode is the two-level reporting mode, a first-level CSI in the two-level reporting mode satisfies any of:
for each port type, the first-level CSI includes reference signal resource indicators of K reference signal resources respectively corresponding to each port type in case that the CSI reporting configuration information indicates that for each port type, the number of the reference signal resource indicators to be reported in the reference signal resources respectively corresponding to each port type is K;
the first-level CSI includes reference signal resource indicators of K reference signal resources in case that the CSI reporting configuration information indicates that the total number of the reference signal resource indicators to be reported in the multiple reference signal resources is K;
for each port type, the first-level CSI includes reference signal resource indicators of R reference signal resources respectively corresponding to each port type in case that the CSI reporting configuration information indicates that for each port type, the number of the reference signal resource indicators to be reported in the reference signal resources respectively corresponding to each port type is at most K, where R is a positive integer greater than or equal to 1 and less than or equal to K; or
the first-level CSI includes reference signal resource indicators of R reference signal resources in case that the CSI reporting configuration information indicates that the total number of reference signal resource indicators to be reported in the multiple reference signal resources is at most K, where R is a positive integer greater than or equal to 1 and less than or equal to K.

In some embodiments, in case that the CSI reporting configuration information indicates that for each port type, the number of the reference signal resource indicators to be reported in the reference signal resources respectively corresponding to each port type is at most K, or indicates that the total number of the reference signal resource indicators to be reported in the multiple reference signal resources is at most K, for the first-level CSI, the second receiving module 72 is further used for:
receiving the first-level CSI transmitted from the terminal based on a bitmap, where a number of bits in the bitmap is determined based on a number of the multiple reference signal resources; and/or,
receiving the first-level CSI transmitted from the terminal device based on multiple information fields, where a number of the multiple information fields is determined based on the number of the reference signal resource indicators included in the CSI.

In some embodiments, in case that the CSI reporting mode is the three-level reporting mode, a first-level CSI and a second-level CSI in the three-level reporting mode satisfy any of:
for each port type, the first-level CSI includes the number of the reference signal resource indicators to be reported in the reference signal resources respectively corresponding to each port type and the second-level CSI includes reference signal resource indicators of R reference signal resources respectively corresponding to each port type in case that the CSI reporting configuration information indicates that for each port type, the number of the reference signal resource indicators to be reported in the reference signal resources respectively corresponding to each port type is at most K, where R is a positive integer greater than or equal to 1 and less than or equal to K; or
the first-level CSI includes the total number of the reference signal resource indicators to be reported and the second-level CSI includes reference signal resource indicators of R reference signal resources in case that the CSI reporting configuration information indicates that the total number of the reference signal resource indicators to be reported in the multiple reference signal resources is at most K, where R is a positive integer greater than or equal to 1 and less than or equal to K.

In some embodiments, the CSI reporting configuration information is further used to indicate reporting of a rank indicator,
where the first-level CSI further includes M rank indicators in case that the CSI reporting mode is the two-level reporting mode and M is a positive integer greater than or equal to 1 and less than or equal to K; or
the second-level CSI further includes M rank indicators in case that the CSI reporting mode is the three-level reporting mode and M is a positive integer greater than or equal to 1 and less than or equal to K.

In an embodiment, the apparatus for CSI reporting provided in embodiments of the present application may implement all the method steps implemented by the method embodiment with the network device as the executing subject, and may achieve the same effects. Therefore, the same parts and beneficial effects as the method embodiment in this embodiment will not be described here.

It should be noted that, the division of units/modules in embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the embodiments of the present application in essence or a part of the embodiments that contributes to the prior art, or all or part of the embodiments, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store a program code such as a U disk, a mobile hard disk, a read-only memory (ROM), a random access memory (RAM), a magnetic disk, or a compact disk.

Embodiments of the present application further provide a computer-readable storage medium, where the non-transient readable storage medium stores a computer program for causing a computer to perform the method for CSI reporting provided in the above embodiments.

In an embodiment, the computer-readable storage medium provided in embodiments of the present application may implement all the method steps implemented in the above method embodiments and achieve the same effects. Therefore, specific descriptions of the same parts and beneficial effects as the method embodiments in this embodiment will not be repeated here.

It should be noted that the computer-readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

Additionally, it should be noted that the terms "first", "second", etc. in embodiments of the present application are used to distinguish similar objects and are not used to describe a specific order or sequence. It should be understood that the terms used in this way may be interchanged in appropriate circumstances. The embodiments of the present application may be implemented in an order other than those illustrated or described herein, and the objects distinguished by "first" and "second" are usually of the same class, without limiting the number of objects. For example, the first object may be one or multiple.

In embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

The term "multiple" in embodiments of the present application refers to two or more quantifiers, similar to other quantifiers.

The solutions provided by the embodiments of the present application may be applicable to various systems, especially a 5G or 6G system For example, applicable systems may be a global system of mobile communication (GSM) system, a code division multiple access (CDMA) system, a wideband code division multiple access (WCDMA), general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, and a 6G system etc. These various systems include a terminal device and a network device. The system may also include a core network part, such as an evolved packet system (EPS), a 5G system (5GS) and the like.

The terminal device involved in the embodiments of the present application may be a device that provides voice and/or data connectivity to a user, a hand-held device with a wireless connection function, or other processing device connected to a wireless modem. In different systems, the names of the terminal device may be different. For example, in the 5G system, the terminal device may be referred to as a user equipment (UE). A wireless terminal device may communicate with one or more core networks (CNs) via a radio access network (RAN), and the wireless terminal device may be a mobile terminal, such as a mobile phone (or referred to as a cellular phone) and a computer with a mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be referred to as a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred to as an access point, or may be a device in the access network that communicates with a wireless terminal device through one or more sectors on the air interface, or other names. The network device may be used to mutually exchange received air frames with Internet Protocol (IP) packets, and act as a router between a wireless terminal device and a rest part of the access network, and the rest part of the access network may include an IP communication network. The network device may also coordinate attribute management for an air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission, etc.

Those skilled in the art should understand that the embodiments of the present application may be provided as methods, systems, or computer program products. Therefore, the present application may take the form of a fully hardware implementation, a fully software implementation, or a combination of software and hardware implementation. Moreover, the present application may take the form of a computer program product implemented on one or more computer usable storage medium (including but not limited to disk storage and optical storage) containing computer usable program code.

The present application is described with reference to flow charts and/or block diagrams of methods, apparatus (systems), and computer program products according to embodiments of the present application. It should be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A method for channel state information (CSI) reporting, performed by a terminal, comprising:
receiving CSI reporting configuration information transmitted from a network device, wherein the CSI reporting configuration information is associated with multiple reference signal resources;
measuring the multiple reference signal resources to obtain respective measurement results of the multiple reference signal resources, wherein the measurement results comprise reference signal resource indicators; and
transmitting CSI to the network device based on the CSI reporting configuration information and the respective measurement results of the multiple reference signal resources, wherein the CSI comprises a first number of reference signal resource indicators, and the first number is at least two.

2. The method of claim 1, wherein transmitting the CSI to the network device based on the CSI reporting configuration information and the respective measurement results of the multiple reference signal resources comprises:
determining a CSI reporting mode based on the CSI reporting configuration information, wherein the CSI reporting mode comprises a two-level reporting mode or a three-level reporting mode;
determining information of each level CSI in the respective measurement results of the multiple reference signal resources based on the CSI reporting configuration information and the CSI reporting mode; and
transmitting the CSI to the network device based on the information of each level CSI.

3. The method of claim 2, wherein the CSI reporting configuration information is used to indicate any of:
for each port type, a number of reference signal resource indicators to be reported in the reference signal resources respectively corresponding to each port type is K, wherein K is a positive integer greater than 1;
a total number of reference signal resource indicators to be reported in the multiple reference signal resources is K, wherein K is a positive integer greater than 1;
for each port type, a number of reference signal resource indicators to be reported in the reference signal resources respectively corresponding to each port type is at most K, wherein K is a positive integer greater than 1; or
a total number of reference signal resource indicators to be reported in the multiple reference signal resources is at most K, wherein K is a positive integer greater than 1.

4. The method of claim 3, wherein the CSI reporting mode is the two-level reporting mode in case that the CSI reporting configuration information indicates that for each port type, the number of the reference signal resource indicators to be reported in the reference signal resources respectively corresponding to each port type is K or indicates that the total number of the reference signal resource indicators to be reported in the multiple reference signal resources is K; or,
the CSI reporting mode is the two-level reporting mode or the three-level reporting mode in case that the CSI reporting configuration information indicates that for each port type, the number of the reference signal resource indicators to be reported in the reference signal resources respectively corresponding to each port type is at most K or indicates that the total number of the reference signal resource indicators to be reported in the multiple reference signal resources is at most K.

5. The method of claim 3, wherein in case that the CSI reporting mode is the two-level reporting mode, a first-level CSI in the two-level reporting mode satisfies any of:
for each port type, the first-level CSI comprises reference signal resource indicators of K reference signal resources respectively corresponding to each port type in case that the CSI reporting configuration information indicates that for each port type, the number of the reference signal resource indicators to be reported in the reference signal resources respectively corresponding to each port type is K;
the first-level CSI comprises reference signal resource indicators of K reference signal resources in case that the CSI reporting configuration information indicates that the total number of the reference signal resource indicators to be reported in the multiple reference signal resources is K;
for each port type, the first-level CSI comprises reference signal resource indicators of R reference signal resources respectively corresponding to each port type in case that the CSI reporting configuration information indicates that for each port type, the number of the reference signal resource indicators to be reported in the reference signal resources respectively corresponding to each port type is at most K, wherein R is a positive integer greater than or equal to 1 and less than or equal to K; or
the first-level CSI comprises reference signal resource indicators of R reference signal resources in case that the CSI reporting configuration information indicates that the total number of reference signal resource indicators to be reported in the multiple reference signal resources is at most K, wherein R is a positive integer greater than or equal to 1 and less than or equal to K.

6. The method of claim 5, wherein in case that the CSI reporting configuration information indicates that for each port type, the number of the reference signal resource indicators to be reported in the reference signal resources respectively corresponding to each port type is at most K, or indicates that the total number of the reference signal resource indicators to be reported in the multiple reference signal resources is at most K, for the first-level CSI, transmitting the CSI to the network device based on the information of each level CSI comprises:
transmitting the first-level CSI to the network device based on a bitmap, wherein a number of bits in the bitmap is determined based on a number of the multiple reference signal resources; and/or,
transmitting the first-level CSI to the network device based on multiple information fields, wherein a number of the multiple information fields is determined based on the number of the reference signal resource indicators comprised in the CSI.

7. The method of claim 3, wherein in case that the CSI reporting mode is the three-level reporting mode, a first-level CSI and a second-level CSI in the three-level reporting mode satisfy any of:
for each port type, the first-level CSI comprises the number of the reference signal resource indicators to be reported in the reference signal resources respectively corresponding to each port type and the second-level CSI comprises reference signal resource indicators of R reference signal resources respectively corresponding to each port type in case that the CSI reporting configuration information indicates that for each port type, the number of the reference signal resource indicators to be reported in the reference signal resources respectively corresponding to each port type is at most K, wherein R is a positive integer greater than or equal to 1 and less than or equal to K; or
the first-level CSI comprises the total number of the reference signal resource indicators to be reported and the second-level CSI comprises reference signal resource indicators of R reference signal resources in case that the CSI reporting configuration information indicates that the total number of the reference signal resource indicators to be reported in the multiple reference signal resources is at most K, wherein R is a positive integer greater than or equal to 1 and less than or equal to K.

8. The method of any of claims 5 to 7, wherein the CSI reporting configuration information is further used to indicate reporting of a rank indicator,
wherein the first-level CSI further comprises M rank indicators in case that the CSI reporting mode is the two-level reporting mode, and M is a positive integer greater than or equal to 1 and less than or equal to K; or
the second-level CSI further comprises M rank indicators in case that the CSI reporting mode is the three-level reporting mode, and M is a positive integer greater than or equal to 1 and less than or equal to K.

9. The method of any of claims 2 to 7, further comprising:
determining a number of CSIs in case that an uplink resource allocated to the terminal by the network device is less than an uplink resource required for transmitting the CSIs, wherein the number of the CSIs is one or more;
determining a target CSI among the CSIs based on the number of the CSIs; and
dropping all or part of information in a last-level CSI of the target CSI,
wherein the last-level CSI is the second-level CSI in case that the CSI reporting mode is the two-level reporting mode, and the last-level CSI is the third-level CSI in case that the CSI reporting mode is the three-level reporting mode.

10. The method of claim 9, wherein determining the target CSI among the CSIs based on the number of the CSIs comprises:
determining the CSI as the target CSI in a case that the number of the CSIs is one; or
determining the target CSI among multiple CSIs based on priorities of the multiple CSIs in case that the number of the CSIs is more than one.

11. The method of claim 9, wherein dropping all or part of information in the last-level CSI of the target CSI comprises:
determining respective reference signal resource indicator priorities for the first number of reference signal resource indicators comprised in the target CSI;
determining a second number of target reference signal resource indicators among the first number of the reference signal resource indicators based on the reference signal resource indicator priorities, wherein the second number is less than or equal to the first number; and
dropping information corresponding to the second number of the target reference signal resource indicators in the last-level CSI.

12. The method of claim 11, wherein for each target reference signal resource indicator, dropping the information corresponding to the second number of the target reference signal resource indicators in the last-level CSI comprises:
determining respective bandwidth priorities of wideband CSI, even sub-band CSI, and odd sub-band CSI and dropping all or part of the information corresponding to the target reference signal resource indicators based on the bandwidth priorities, wherein the bandwidth priorities of the wideband CSI, the even sub-band CSI, and the odd sub-band CSI decrease in sequence; or
determining priorities of precoding matrix indicator (PMI) groups corresponding to the target reference signal resource indicators and dropping all or part of the information corresponding to the target reference signal resource indicators based on the priorities of the PMI groups.

13. A method for channel state information (CSI) reporting, performed by a network device, comprising:
transmitting CSI reporting configuration information to a terminal, wherein the CSI reporting configuration information is associated with multiple reference signal resources;
receiving CSI transmitted from the terminal based on the CSI reporting configuration information, wherein the CSI comprises a first number of reference signal resource indicators, and the first number is at least two.

14. The method of claim 13, wherein the CSI reporting configuration information is used to determine a CSI reporting mode and information of each level CSI, and receiving the CSI transmitted from the terminal based on the CSI reporting configuration information comprises:
receiving the CSI transmitted from the terminal based on the information of each level CSI, wherein the CSI reporting mode comprises a two-level reporting mode or a three-level reporting mode.

15. The method of claim 14, wherein the CSI reporting configuration information is used to indicate any of:
for each port type, a number of reference signal resource indicators to be reported in the reference signal resources respectively corresponding to each port type is K, wherein K is a positive integer greater than 1;
a total number of reference signal resource indicators to be reported in the multiple reference signal resources is K, wherein K is a positive integer greater than 1;
for each port type, a number of reference signal resource indicators to be reported in the reference signal resources respectively corresponding to each port type is at most K, wherein K is a positive integer greater than 1; or
a total number of reference signal resource indicators to be reported in the multiple reference signal resources is at most K, wherein K is a positive integer greater than 1.

16. The method of claim 15, wherein the CSI reporting mode is the two-level reporting mode in case that the CSI reporting configuration information indicates that for each port type, the number of the reference signal resource indicators to be reported in the reference signal resources respectively corresponding to each port type is K or indicates that the total number of the reference signal resource indicators to be reported in the multiple reference signal resources is K; or,
the CSI reporting mode is the two-level reporting mode or the three-level reporting mode in case that the CSI reporting configuration information indicates that for each port type, the number of the reference signal resource indicators to be reported in the reference signal resources respectively corresponding to each port type is at most K or indicates that the total number of the reference signal resource indicators to be reported in the multiple reference signal resources is at most K.

17. The method of claim 15, wherein in case that the CSI reporting mode is the two-level reporting mode, a first-level CSI in the two-level reporting mode satisfies any of:
for each port type, the first-level CSI comprises reference signal resource indicators of K reference signal resources respectively corresponding to each port type in case that the CSI reporting configuration information indicates that for each port type, the number of the reference signal resource indicators to be reported in the reference signal resources respectively corresponding to each port type is K;
the first-level CSI comprises reference signal resource indicators of K reference signal resources in case that the CSI reporting configuration information indicates that the total number of the reference signal resource indicators to be reported in the multiple reference signal resources is K;
for each port type, the first-level CSI comprises reference signal resource indicators of R reference signal resources respectively corresponding to each port type in case that the CSI reporting configuration information indicates that for each port type, the number of the reference signal resource indicators to be reported in the reference signal resources respectively corresponding to each port type is at most K, wherein R is a positive integer greater than or equal to 1 and less than or equal to K; or
the first-level CSI comprises reference signal resource indicators of R reference signal resources in case that the CSI reporting configuration information indicates that the total number of reference signal resource indicators to be reported in the multiple reference signal resources is at most K, wherein R is a positive integer greater than or equal to 1 and less than or equal to K.

18. The method of claim 17, wherein in case that the CSI reporting configuration information indicates that for each port type, the number of the reference signal resource indicators to be reported in the reference signal resources respectively corresponding to each port type is at most K, or indicates that the total number of the reference signal resource indicators to be reported in the multiple reference signal resources is at most K, for the first-level CSI, receiving the CSI transmitted from the terminal based on the information of each level CSI comprises:
receiving the first-level CSI transmitted from the terminal based on a bitmap, wherein a number of bits in the bitmap is determined based on a number of the multiple reference signal resources; and/or,
receiving the first-level CSI transmitted from the terminal based on multiple information fields, wherein a number of the multiple information fields is determined based on the number of the reference signal resource indicators comprised in the CSI.

19. The method of claim 15, wherein in case that the CSI reporting mode is the three-level reporting mode, a first-level CSI and a second-level CSI in the three-level reporting mode satisfy any of:
for each port type, the first-level CSI comprises the number of the reference signal resource indicators to be reported in the reference signal resources respectively corresponding to each port type and the second-level CSI comprises reference signal resource indicators of R reference signal resources respectively corresponding to each port type in case that the CSI reporting configuration information indicates that for each port type, the number of the reference signal resource indicators to be reported in the reference signal resources respectively corresponding to each port type is at most K, wherein R is a positive integer greater than or equal to 1 and less than or equal to K; or
the first-level CSI comprises the total number of the reference signal resource indicators to be reported and the second-level CSI comprises reference signal resource indicators of R reference signal resources in case that the CSI reporting configuration information indicates that the total number of the reference signal resource indicators to be reported in the multiple reference signal resources is at most K, wherein R is a positive integer greater than or equal to 1 and less than or equal to K.

20. The method of any of claims 17 to 19, wherein the CSI reporting configuration information is further used to indicate reporting of a rank indicator,
wherein the first-level CSI further comprises M rank indicators in case that the CSI reporting mode is the two-level reporting mode, and M is a positive integer greater than or equal to 1 and less than or equal to K; or
the second-level CSI further comprises M rank indicators in case that the CSI reporting mode is the three-level reporting mode, and M is a positive integer greater than or equal to 1 and less than or equal to K.

21. A terminal, comprising a memory, a transceiver, and a processor, wherein
the memory is used for storing a computer program; the transceiver is used for transmitting and receiving data under control of the processor; and the processor is used for reading the computer program in the memory and performing the following operations:
receiving CSI reporting configuration information transmitted from a network device, wherein the CSI reporting configuration information is associated with multiple reference signal resources;
measuring the multiple reference signal resources to obtain respective measurement results of the multiple reference signal resources, wherein the measurement results comprise reference signal resource indicators; and
transmitting CSI to the network device based on the CSI reporting configuration information and the respective measurement results of the multiple reference signal resources, wherein the CSI comprises a first number of reference signal resource indicators, and the first number is at least two.

22. The terminal of claim 21, wherein transmitting the CSI to the network device based on the CSI reporting configuration information and the respective measurement results of the multiple reference signal resources comprises:
determining a CSI reporting mode based on the CSI reporting configuration information, wherein the CSI reporting mode comprises a two-level reporting mode or a three-level reporting mode;
determining information of each level CSI in the respective measurement results of the multiple reference signal resources based on the CSI reporting configuration information and the CSI reporting mode; and
transmitting the CSI to the network device based on the information of each level CSI.

23. The terminal of claim 22, wherein the CSI reporting configuration information is used to indicate any of:
for each port type, a number of reference signal resource indicators to be reported in the reference signal resources respectively corresponding to each port type is K, wherein K is a positive integer greater than 1;
a total number of reference signal resource indicators to be reported in the multiple reference signal resources is K, wherein K is a positive integer greater than 1;
for each port type, a number of reference signal resource indicators to be reported in the reference signal resources respectively corresponding to each port type is at most K, wherein K is a positive integer greater than 1; or
a total number of reference signal resource indicators to be reported in the multiple reference signal resources is at most K, wherein K is a positive integer greater than 1.

24. The terminal of claim 23, wherein the CSI reporting mode is the two-level reporting mode in case that the CSI reporting configuration information indicates that for each port type, the number of the reference signal resource indicators to be reported in the reference signal resources respectively corresponding to each port type is K or indicates that the total number of the reference signal resource indicators to be reported in the multiple reference signal resources is K; or,
the CSI reporting mode is the two-level reporting mode or the three-level reporting mode in case that the CSI reporting configuration information indicates that for each port type, the number of the reference signal resource indicators to be reported in the reference signal resources respectively corresponding to each port type is at most K or indicates that the total number of the reference signal resource indicators to be reported in the multiple reference signal resources is at most K.

25. The terminal of claim 23, wherein in case that the CSI reporting mode is the two-level reporting mode, a first-level CSI in the two-level reporting mode satisfies any of:
for each port type, the first-level CSI comprises reference signal resource indicators of K reference signal resources respectively corresponding to each port type in case that the CSI reporting configuration information indicates that for each port type, the number of the reference signal resource indicators to be reported in the reference signal resources respectively corresponding to each port type is K;
the first-level CSI comprises reference signal resource indicators of K reference signal resources in case that the CSI reporting configuration information indicates that the total number of the reference signal resource indicators to be reported in the multiple reference signal resources is K;
for each port type, the first-level CSI comprises reference signal resource indicators of R reference signal resources respectively corresponding to each port type in case that the CSI reporting configuration information indicates that for each port type, the number of the reference signal resource indicators to be reported in the reference signal resources respectively corresponding to each port type is at most K, wherein R is a positive integer greater than or equal to 1 and less than or equal to K; or
the first-level CSI comprises reference signal resource indicators of R reference signal resources in case that the CSI reporting configuration information indicates that the total number of reference signal resource indicators to be reported in the multiple reference signal resources is at most K, wherein R is a positive integer greater than or equal to 1 and less than or equal to K.

26. The terminal of claim 25, wherein in case that the CSI reporting configuration information indicates that for each port type, the number of the reference signal resource indicators to be reported in the reference signal resources respectively corresponding to each port type is at most K, or indicates that the total number of the reference signal resource indicators to be reported in the multiple reference signal resources is at most K, for the first-level CSI, transmitting the CSI to the network device based on the information of each level CSI comprises:
transmitting the first-level CSI to the network device based on a bitmap, wherein a number of bits in the bitmap is determined based on a number of the multiple reference signal resources; and/or,
transmitting the first-level CSI to the network device based on multiple information fields, wherein a number of the multiple information fields is determined based on the number of the reference signal resource indicators comprised in the CSI.

27. The terminal of claim 23, wherein in case that the CSI reporting mode is the three-level reporting mode, a first-level CSI and a second-level CSI in the three-level reporting mode satisfy any of:
for each port type, the first-level CSI comprises the number of the reference signal resource indicators to be reported in the reference signal resources respectively corresponding to each port type and the second-level CSI comprises reference signal resource indicators of R reference signal resources respectively corresponding to each port type in case that the CSI reporting configuration information indicates that for each port type, the number of the reference signal resource indicators to be reported in the reference signal resources respectively corresponding to each port type is at most K, wherein R is a positive integer greater than or equal to 1 and less than or equal to K; or
the first-level CSI comprises the total number of the reference signal resource indicators to be reported and the second-level CSI comprises reference signal resource indicators of R reference signal resources in case that the CSI reporting configuration information indicates that the total number of the reference signal resource indicators to be reported in the multiple reference signal resources is at most K, wherein R is a positive integer greater than or equal to 1 and less than or equal to K.

28. The terminal of any of claims 25 to 27, wherein the CSI reporting configuration information is further used to indicate reporting of a rank indicator,
wherein the first-level CSI further comprises M rank indicators in case that the CSI reporting mode is the two-level reporting mode, and M is a positive integer greater than or equal to 1 and less than or equal to K; or
the second-level CSI further comprises M rank indicators in case that the CSI reporting mode is the three-level reporting mode, and M is a positive integer greater than or equal to 1 and less than or equal to K.

29. The terminal of any of claims 22 to 27, the processor is further used for:
determining a number of CSIs in case that an uplink resource allocated to the terminal by the network device is less than an uplink resource required for transmitting the CSIs, wherein the number of the CSIs is one or more;
determining a target CSI among the CSIs based on the number of the CSIs; and
dropping all or part of information in a last-level CSI of the target CSI,
wherein the last-level CSI is the second-level CSI in case that the CSI reporting mode is the two-level reporting mode, and the last-level CSI is the third-level CSI in case that the CSI reporting mode is the three-level reporting mode.

30. The terminal of claim 29, wherein determining the target CSI among the CSIs based on the number of the CSIs comprises:
determining the CSI as the target CSI in case that the number of the CSIs is one; or
determining the target CSI among multiple CSIs based on priorities of the multiple CSIs in case that the number of the CSIs is more than one.

31. The terminal of claim 29, wherein dropping all or part of information in the last-level CSI of the target CSI comprises:
determining respective reference signal resource indicator priorities for the first number of reference signal resource indicators comprised in the target CSI;
determining a second number of target reference signal resource indicators among the first number of the reference signal resource indicators based on the reference signal resource indicator priorities, wherein the second number is less than or equal to the first number; and
dropping information corresponding to the second number of the target reference signal resource indicators in the last-level CSI.

32. The terminal of claim 31, wherein for each target reference signal resource indicator, dropping the information corresponding to the second number of the target reference signal resource indicators in the last-level CSI comprises:
determining respective bandwidth priorities of wideband CSI, even sub-band CSI, and odd sub-band CSI and dropping all or part of the information corresponding to the target reference signal resource indicators based on the bandwidth priorities, wherein the bandwidth priorities of the wideband CSI, the even sub-band CSI, and the odd sub-band CSI decrease in sequence; or
determining the priorities of precoding matrix indicator (PMI) groups corresponding to the target reference signal resource indicators and dropping all or part of the information corresponding to the target reference signal resource indicators based on the priorities of the PMI groups.

33. A network device comprising a memory, a transceiver, and a processor, wherein
the memory is used for storing a computer program; the transceiver is used for transmitting and receiving data under control of the processor; and the processor is used for reading the computer program in the memory and performing the following operations:
transmitting CSI reporting configuration information to a terminal, wherein the CSI reporting configuration information is associated with multiple reference signal resources;
receiving CSI transmitted from the terminal based on the CSI reporting configuration information, wherein the CSI comprises a first number of reference signal resource indicators, and the first number is at least two.

34. The network device of claim 33, wherein the CSI reporting configuration information is used to determine a CSI reporting mode and information of each level CSI, and receiving the CSI transmitted from the terminal based on the CSI reporting configuration information comprises:
receiving the CSI transmitted from the terminal based on the information of each level CSI, wherein the CSI reporting mode comprises a two-level reporting mode or a three-level reporting mode.

35. The network device of claim 34, wherein the CSI reporting configuration information is used to indicate any of:
for each port type, a number of reference signal resource indicators to be reported in the reference signal resources respectively corresponding to each port type is K, wherein K is a positive integer greater than 1;
a total number of reference signal resource indicators to be reported in the multiple reference signal resources is K, wherein K is a positive integer greater than 1;
for each port type, a number of reference signal resource indicators to be reported in the reference signal resources respectively corresponding to each port type is at most K, wherein K is a positive integer greater than 1; or
a total number of reference signal resource indicators to be reported in the multiple reference signal resources is at most K, wherein K is a positive integer greater than 1.

36. The network device of claim 35, wherein the CSI reporting mode is the two-level reporting mode in case that the CSI reporting configuration information indicates that for each port type, the number of the reference signal resource indicators to be reported in the reference signal resources respectively corresponding to each port type is K or indicates that the total number of the reference signal resource indicators to be reported in the multiple reference signal resources is K; or,
the CSI reporting mode is the two-level reporting mode or the three-level reporting mode in case that the CSI reporting configuration information indicates that for each port type, the number of the reference signal resource indicators to be reported in the reference signal resources respectively corresponding to each port type is at most K or indicates that the total number of the reference signal resource indicators to be reported in the multiple reference signal resources is at most K.

37. The network device of claim 35, wherein in case that the CSI reporting mode is the two-level reporting mode, a first-level CSI in the two-level reporting mode satisfies any of:
for each port type, the first-level CSI comprises reference signal resource indicators of K reference signal resources respectively corresponding to each port type in case that the CSI reporting configuration information indicates that for each port type, the number of the reference signal resource indicators to be reported in the reference signal resources respectively corresponding to each port type is K;
the first-level CSI comprises reference signal resource indicators of K reference signal resources in case that the CSI reporting configuration information indicates that the total number of the reference signal resource indicators to be reported in the multiple reference signal resources is K;
for each port type, the first-level CSI comprises reference signal resource indicators of R reference signal resources respectively corresponding to each port type in case that the CSI reporting configuration information indicates that for each port type, the number of the reference signal resource indicators to be reported in the reference signal resources respectively corresponding to each port type is at most K, wherein R is a positive integer greater than or equal to 1 and less than or equal to K; or
the first-level CSI comprises reference signal resource indicators of R reference signal resources in case that the CSI reporting configuration information indicates that the total number of reference signal resource indicators to be reported in the multiple reference signal resources is at most K, wherein R is a positive integer greater than or equal to 1 and less than or equal to K.

38. The network device of claim 37, wherein in case that the CSI reporting configuration information indicates that for each port type, the number of the reference signal resource indicators to be reported in the reference signal resources respectively corresponding to each port type is at most K, or indicates that the total number of the reference signal resource indicators to be reported in the multiple reference signal resources is at most K, for the first-level CSI, receiving the CSI transmitted from the terminal based on the information of each level CSI comprises:
receiving the first-level CSI transmitted from the terminal based on a bitmap, wherein a number of bits in the bitmap is determined based on a number of the multiple reference signal resources; and/or,
receiving the first-level CSI transmitted from the terminal based on multiple information fields, wherein a number of the multiple information fields is determined based on the number of the reference signal resource indicators comprised in the CSI.

39. The network device of claim 35, wherein in case that the CSI reporting mode is the three-level reporting mode, a first-level CSI and a second-level CSI in the three-level reporting mode satisfy any of:
for each port type, the first-level CSI comprises the number of the reference signal resource indicators to be reported in the reference signal resources respectively corresponding to each port type and the second-level CSI comprises reference signal resource indicators of R reference signal resources respectively corresponding to each port type in case that the CSI reporting configuration information indicates that for each port type, the number of the reference signal resource indicators to be reported in the reference signal resources respectively corresponding to each port type is at most K, wherein R is a positive integer greater than or equal to 1 and less than or equal to K; or
the first-level CSI comprises the total number of the reference signal resource indicators to be reported and the second-level CSI comprises reference signal resource indicators of R reference signal resources in case that the CSI reporting configuration information indicates that the total number of the reference signal resource indicators to be reported in the multiple reference signal resources is at most K, wherein R is a positive integer greater than or equal to 1 and less than or equal to K.

40. The network device of any of claims 37 to 39, wherein the CSI reporting configuration information is further used to indicate reporting of a rank indicator,
wherein the first-level CSI further comprises M rank indicators in case that the CSI reporting mode is the two-level reporting mode, and M is a positive integer greater than or equal to 1 and less than or equal to K; or
the second-level CSI further comprises M rank indicators in case that the CSI reporting mode is the three-level reporting mode, and M is a positive integer greater than or equal to 1 and less than or equal to K.

41. An apparatus for channel state information (CSI) reporting, for use in a terminal, comprising:
a first receiving module, used for receiving CSI reporting configuration information transmitted from a network device, wherein the CSI reporting configuration information is associated with multiple reference signal resources;
a measuring module, used for measuring the multiple reference signal resources to obtain respective measurement results of the multiple reference signal resources, wherein the measurement results comprise reference signal resource indicators; and
a first transmitting module, used for transmitting CSI to the network device based on the CSI reporting configuration information and the respective measurement results of the multiple reference signal resources, wherein the CSI comprises a first number of reference signal resource indicators, and the first number is at least two.

42. An apparatus for channel state information (CSI) reporting, for use in a network device, comprising:
a second transmitting module, used for transmitting CSI reporting configuration information to a terminal, wherein the CSI reporting configuration information is associated with multiple reference signal resources;
a second receiving module, used for receiving CSI transmitted from the terminal based on the CSI reporting configuration information, wherein the CSI comprises a first number of reference signal resource indicators, and the first number is at least two.

43. A computer-readable storage medium storing a computer program, wherein the computer program is used for causing a computer to perform the method for channel state information (CSI) reporting of any of claims 1 to 12, or used for causing a computer to perform the method for channel state information (CSI) reporting of any of claims 13 to 20.
